# EUROPÄISCHE PATENTSCHRIFT

(11) **EP 1 606 075 B1**
(45) Veröffentlichungstag und Bekanntmachung des Hinweises auf die Patenterteilung: **02.11.2006**
(21) Anmeldenummer: 04716185.6
(22) Anmeldetag: 02.03.2004
(51) Int. Cl.: B23K 26/40, B41K 1/54, B23K 26/36

(54) **VERFAHREN SOWIE VORRICHTUNG ZUR BEARBEITUNG VON AUS EINER TRAGEEINRICHTUNG UND EINEM STEMPELKISSEN GEBILDETEN VERBUNDTEILEN**
METHOD AND DEVICE FOR MACHINING COMPOSITE PARTS FORMED FROM A CARRIER DEVICE AND A STAMPING PAD
PROCEDE ET DISPOSITIF POUR USINER DES PIECES COMPOSITES FORMEES D'UN SYSTEME DE SUPPORT ET D'UN COUSSIN ENCREUR

(30) Priorität: 26.03.2003 AT 4792003
(43) Veröffentlichungstag der Anmeldung: 21.12.2005
(73) Patentinhaber: Trotec Produktions- und Vertriebs GMBH, 4600 Wels (AT)
(72) Erfinder: FAZENY, Stephan, A-4810 Gmunden (AT)
(74) Vertreter: Secklehner, Günter
(86) Internationale Anmeldenummer: PCT/AT2004/000061
(87) Internationale Veröffentlichungsnummer: WO 2004/085110

(56) Entgegenhaltungen:
- DE-A- 19 715 702
- US-A- 3 009 440
- US-A- 5 601 644
- US-B1- 6 423 931

## Beschreibung

Die Erfindung betrifft ein Verfahren zur maschinellen Bearbeitung zumindest von aus einer Trageeinrichtung und einem Stempelkissen gebildeten Verbundteilen mittels einer Bearbeitungsvorrichtung, bei dem zur Bearbeitung des Verbundteiles zumindest ein Bearbeitungskopf einer Materialabtragungseinrichtung und der Verbundteil durch eine von einer Steuereinrichtung gesteuerten und/oder geregelten Handhabungseinrichtung relativ zueinander, insbesondere in einer XY- Ebene, bewegt werden, und durch die Materialabtragungseinrichtung ein Materialabtrag am Verbundteil erfolgt, sowie eine Bearbeitungsvorrichtung, zumindest umfassend eine Materialabtragungseinrichtung und eine Handhabungseinrichtung, wobei zumindest ein Bearbeitungskopf der Materialabtragungseinrichtung über die Handhabungseinrichtung zumindest in einer XY- Ebene verstellbar, insbesondere bewegbar, ist und die Handhabungseinrichtung zur Steuerung und/oder Regelung derselben mit einer Steuereinrichtung verbunden und/oder verbindbar ist.

Es sind aus dem Stand der Technik bereits mehrfärbige, insbesondere zweifärbige, Stempelkissen mit Tragvorrichtungen, insbesondere Stempelkissenhaltern, und Verfahren zur Herstellung derselben bekannt, wobei bisher verschiedenfärbige Stempelkissen in der Tragevorrichtung durch Trennstege flüssigkeitsdicht voneinander getrennt angeordnet wurden. Bei einem solchen Aufbau ist es notwendig, dass die Tragvorrichtung bei deren Fertigung zur Aufnahme verschiedenfärbiger Stempelkissenteile mit Trennstegen versehen wird und anschließend festgelegte Größen und Formen von Stempelkissenteilen in die Tragvorrichtung eingesetzt werden, wodurch ein Verbundteil gebildet wird. Bei der Verwendung solcher Stempelkissen, vorzugsweise in Selbstfärbestempeln, ist somit zwar die Anfertigung von mehrfärbigen Stempelabdrucken möglich, wobei durch die vorgebebene Farbentrennung der unterschiedlichen Stempelkissenteile, die bei der Herstellung der Stempelkissenhaltern durch die Trennstege bestimmt werden, lediglich festgelegte Bereiche der Stempelplatte andersfärbig drucken. Nachteilig ist es bei den im Stand der Technik bekannten Stempelkissen daher, dass diese nicht individuell auf spezielle Anforderungen von Benutzern hinsichtlich einer farbigen Gestaltung von Stempelabdrucken anpassbar sind, da bisher nur gewisse, vordefinierte Bereiche zum andersfarbigen Abdruck geeignet sind und diese Bereiche durch einen Benutzer, beispielsweise zur färbigen Gestaltung gewisser Schriftzüge, nicht bestimmbar sind. Auch ist es im Stand der Technik bisher nicht möglich, mehrfärbige und individuell gestaltete Stempelkissen und Stempelplatten zur Verwendung in selbstfärbenden Stempeln automatisiert zu fertigen. US-B1- 6423931 offenbart eine Bearbeitungsvorrichtung, die eine Materialabtragungseinrichtung und eine mit einer Steuereinrichtung verbundene Handhabungseinrichtung umfasst, und ein Verfahren zur maschinellen Bearbeitung von Gummi mittels der obengenannten Bearbeitungsvorrichtung.

Aufgabe der Erfindung ist es ein Verfahren sowie eine Vorrichtung zu schaffen, sodass eine einfache und flexible Herstellung zumindest von Verbundteilen, bestehend aus einem Stempelkissen und einer Trageeinrichtung, erreicht werden kann. Eine Teilaufgabe der Erfindung ist es weiters, die Fertigung von individuellen Verbundteilen zur Verwendung mit einer Stempelvorrichtung zu ermöglichen.

Diese Aufgabe der Erfindung wird unabhängig dadurch gelöst, dass durch die Materialabtragungseinrichtung das zumindest teilweise mit der Trageeinrichtung verbundene Stempelkissen des Verbundteiles in mehrere, über eine Trennfuge voneinander beabstandete, Kissenteile geteilt wird. Dabei ist es vorteilhaft, dass durch die Trennung des Stempelkissens in voneinander unabhängige, einzelne Kissenteile durch die Bestimmbarkeit des abzutragenden Bereiches am Stempelkissen mittels der Steuereinrichtung eine individuelle und flexible Form der Kissenteile erzeugt werden kann. Weiters ist es von Vorteil, dass ein handelsüblicher, durch ein Stempelkissen und einer Trageeinrichtung, insbesondere einem Stempelkissenhalter, gebildeter Verbundteil, der ein einzelnes, durchgängiges Stempelkissen aufweist, durch maschinelle Bearbeitung derart präpariert werden kann, dass unterschiedliche Kissenteile unterschiedliche und/oder gleichartige Stempeltinten aufnehmen können, wobei diese unterschiedlichen Kissenteile in deren Anzahl und Ausdehnung bzw. Form durch Festlegung von ein oder mehreren Abtragungsbereichen, insbesondere Schneidlinien, bestimmbar sind.

Es ist auch von Vorteil, wenn von der Steuereinrichtung zumindest eine Schneidlinie am Verbundteil, insbesondere an einer Bearbeitungsoberfläche, festgelegt wird und das Stempelkissen entlang der Schneidlinie in die Kissenteile geteilt wird, wodurch einzufärbende Kissenteile in nahezu beliebiger Form automatisiert und präzise erzeugt werden können.

Dadurch, dass über eine Dicke des Stempelkissens entlang der Schneidlinie zur Bildung der Trennfuge durchgängig Material abgetragen und somit nicht zusammenhängende Kissenteile gefertigt werden ist es von Vorteil, dass eine vollständige Trennung der Kissenteile erreicht wird und dass ehemals einstückige Stempelkissen trotz seiner Anordnung in der Trageeinrichtung über dessen Dicke entlang einer Schneidlinie vollumfänglich getrennt und somit separat zu weiteren Kissenteilen ausgebildet ist.

Es ist auch von besonderen Vorteil, dass nach dem Trennen des Stempelkissens in mehrere Kissenteile diese mit Stempeltinte versehen werden; über eine Tintenspendeeinrichtung der Bearbeitungseinheit die unterschiedlichen Kissenteile mit Stempeltinte bzw. färbenden Fluiden versehen werden; die Kissenteile mit unterschiedlichen und/oder gleichartigen, insbesondere verschiedenfärbige und/oder gleichfärbige, Stempeltinten versehen werden, sodass ein mehrfärbiges Stempelkissen geschaffen wird, welches durch Verwendung mit einer Stempeleinrichtung zur Erzeugung mehrfärbiger Stempelabdrucke geeignet ist, und farbige Stempelabdrucke in nahezu beliebiger und speziell auf Anfordernisse eines Benutzers abgestimmter Form bzw. Farbkombination produzierbar sind.

Weiters ist es von Vorteil, wenn mehrere, verschiedenartige, insbesondere verschiedenfärbige, Stempeltinten vermischt werden und durch eine dosierbare, beispielsweise additive, Vermischung der Stempeltinten weitere Arten bzw. Farben, insbesondere aus der Palette der RGB-, CMYK- Farben usw., von Stempeltinten zum Auftrag auf die Kissenteile erzeugt werden, wodurch eine Vielzahl von unterschiedlichen Farben kreiert und auf das Stempelkissen aufgebracht werden können, wodurch die Qualität und Individualität von Stempelabdrucken zusätzlich erhöht wird.

Dadurch, dass die Tintenabgabe der Tintenspendeeinrichtung in Form von Flüssigkeitstropfen erfolgt, die über ein oder mehrere Auslassöffnungen in Richtung eines Tintenauftragepunktes auf einen der Kissenteile aufgetropft werden ist es von Vorteil, dass die zum Auftrag der Stempeltinte vorgesehene Auslassöffnung auf einen Tintenauftragepunkt lediglich über diesen positioniert werden muss und entweder durch Schwerkraft oder mittels einer Kraftbeaufschlagung, insbesondere Druckbeaufschlagung, die Kissenteile mit ein oder mehreren Tintentropfen versehen werden, wodurch entsprechend der aufzubringenden Anzahl an Tropfen eine Dosierung der durch den Kissenteil zu speichernden Farbmenge ermöglicht wird.

Es ist auch von Vorteil, dass verschiedenartige Stempeltinten für die unterschiedlichen Kissenteile jeweils über unterschiedliche Auslassöffnungen, die jeweils mit getrennten Aufnahmekammern für Stempeltinte strömungsverbunden sind, abgegeben werden und/oder verschiedenartige Stempeltinten für die unterschiedlichen Kissenteile über eine Auslassöffnung, die mit unterschiedlichen Aufnahmekammern für Stempeltinte verbindbar ist, abgegeben werden, da somit jeder Auslassöffnung eine spezielle Art einer Stempeltinte zugeordnet ist und so keine unbeabsichtigte Vermischung von unterschiedlichen Farbarten von Stempeltinten möglich ist und/oder durch Anordnung nur einer Auslassöffnung eine platzsparende und zur Farbvermengung unterschiedlicher Arten von Stempeltinten zur Erzeugung weiterer Farben geeignete Vorgehensweise ermöglicht wird.

Durch den Verfahrensschritt, dass von der Steuereinrichtung mehrere Tintenauftragepunkte an den Kissenoberteilseiten, insbesondere rastartig, festgelegt bzw. vorgegeben werden; zumindest die Auslassöffnung, insbesondere eine Auslassdüse, der Tintenspendeeinrichtung zur Tintenabgabe auf die unterschiedlichen Tintenauftragepunkte, bevorzugt an Rasterpunkten, positioniert wird; dass an den Tintenauftragepunkten ein gepulster Tintenauftrag durch je ein oder mehrere Tintentropfen erfolgt; ist es in vorteilhafter Weise möglich, die Kissenteile gleichmäßig mit Stempeltinte zu versorgen, wodurch in den unterschiedlichen Bereichen des Stempelkissens in etwa die selbe Farbmenge gespeichert wird und daher an den Kissenoberteilseiten entlang derselben bei Kontaktierung durch die Stempelplatte eine gleichmäßige Farbabgabe erfolgt.

Wenn mittels kurzzeitig angelegtem Überdruck, insbesondere eines Druckstoßes, zumindest im Bereich der Auslassöffnung, bevorzugt in den Tintenbehältern, eine Abgabe der Stempeltinte durch einen Flüssigkeitsausstoß aus der Auslassöffnung erfolgt, ist es von Vorteil, dass durch den kurzzeitigen Überdruck aufgrund der Intensität bzw. Wirkdauer desselben die Menge des Tintensausstoßes, insbesondere der Tintentropfen steuer- bzw. regulierbar ist und ein kostengünstiger und einfach zu kontrollierender Druckerzeuger verwendbar ist.

Dadurch, dass die Auslassöffnung mittels einem, durch Kraftbeaufschlagung in Durchlassstellung verbringbaren und im Normalzustand vorzugsweise in Schießstellung befindlichen, Sperreinrichtung, insbesondere einem Rückschlagventil, gegenüber einer unbeabsichtigten Tintenabgabe abgedichtet wird ist es von Vorteil, dass nach einem erfolgten Flüssigkeitsausstoß aus der Auslassöffnung ein ungewolltes Nachtropfen von im Bereich der Auslassöffnung befindliche Stempeltinte durch Verschließen eines Flüssigkeitskanals verhindert wird.

Durch die Vorgehensweise, bei der zumindest eine Effektoreinheit, die vorzugsweise zumindest einen Abgabeeinrichtung der Tintenspendeeinrichtung und den Bearbeitungskopf der Materialabtrageeinrichtung umfasst, durch die Handhabungseinrichtung verstellt bzw. positioniert wird, ist eine kompakte Anordnung und einfache Steuerung lediglich der Wirkmittel zur Bearbeitung des Verbundteiles bzw. weiterer Werkstücke vorteilhaft möglich.

Dadurch, dass durch die Steuereinrichtung an der Bearbeitungsoberfläche des Verbundteils, insbesondere des Stempelkissens, Oberflächenteilbereiche festgelegt werden und/oder festlegbar sind und entsprechend dieser Oberflächenteilbereiche das Stempelkissen in die einzelnen Kissenteile getrennt wird; dass mittels der Steuereinrichtung zwischen aneinandergrenzenden Oberflächenteilbereichen die Schneidlinie festgelegt wird, entlang welcher zumindest die Materialabtragungseinrichtung durch die Handhabungseinrichtung verstellt wird ist es von Vorteil, dass durch die Steuereinrichtung selbsttätig die Schneidlinien zur Teilung des Stempelkissen in die Kissenteile ermittelt wird und anschließend diese Trennung durch Bewegung der in aktivem Zustand befindlichen Materialabtragungseinrichtung entlang dieser Schneidlinie die Trennung erfolgt.

Von Vorteil ist auch, dass die Trageinrichtung für das Stempelkissen und die Kissenteile an einer Bodenplatte gleichzeitig mit dem Trennvorgang des Stempelkissens durch die Materialabtragungseinrichtung entsprechend der Schneidlinie angeritzt und/oder an den Haltefortsätzen im Bereich der Bearbeitungsoberfläche teilweise durchtrennt wird, wodurch eine vollständige Trennung der Kissenteile auch im Bereich der die Kissenteiloberseite teilweise umschließenden Haltefortsätze erreicht wird und durch ein Anritzen der Trageeinrichtung im Bereich der Bodenplatte gegebenenfalls eine Ausnehmung mit geringfügiger Tiefe und einem Grat gebildet wird und somit ein Flüssigkeitsübertritt an der Bodenfläche zwischen den Kissenteilen erschwert wird.

Es ist auch von Vorteil, dass über die durch die Steuereinrichtung kontrollierte Handhabungseinrichtung die Effektoreinheit oder einzelne Komponenten der Effektoreinheit in einer XY-Ebene, insbesondere in einem durch zwei Koordinaten gebildeten, kartesischen Koordinatensystem, verstellt und positioniert werden, wodurch die Auslassöffnungen der Tintenauftrageeinrichtungen und/oder die Wirkmittel der Materialabtragungseinrichtung zur Bearbeitung des Verbundteils in der XY-Ebene frei positionierbar sind und entlang eines Pfades bzw. einer Bahn, insbesondere durch Koordinaten-Punkt-Steuerung, verstellbar sind.

Dadurch, dass über eine der Steuereinrichtung zugeordneten Ein- und/oder Ausgabeeinrichtung die Festlegung der Oberflächenteilbereiche erfolgt; an der Ein- und/oder Ausgabeeinrichtung, insbesondere einer Recheneinheit, wie z.B. einem Personal Computer, eine Stempelfläche einer Stempelplatte visualisiert wird und über die Ein- und/oder Ausgabeeinrichtung der Stempelplatte an der Stempelfläche mehrere Plattenbereiche zugeteilt werden; die Zuteilung der Plattenbereiche durch Festlegung von mehreren an der Stempelplatte auszubildenden bzw. anzubringenden Gravuranordnungen, beispielsweise Schriftzügen, erfolgt; entsprechend der Anzahl und Form der Plattenbereiche bzw. Gravuranordnungen durch die Steuereinrichtung die Oberflächenteilbereich bzw. Schneidlinien am Stempelkissen zum Trennen des Stempelkissens festgelegt werden ist von Vorteil, dass mittels der Ein- und/oder Ausgabeeinrichtung entsprechend den Wünschen eines Anwenders die Bereichseinteilung der zu fertigenden Kissenteile vorgenommen werden kann, indem Stempelplattenbereiche, die mit entsprechenden Kissenteilen bei der vorgesehenen Verwendung im Selbstfärbestempel zum Farbauftrag auf die entsprechenden Schriftzüge bzw. Gravuranordnungen in Kontakt treten, festgelegt werden können und entsprechend der Form bzw. festgelegten Farbe der Stempelplattenbereiche an der Ein- und/oder Ausgabeeinrichtung eine Einteilung des Stempelkissens in Kissenteile bzw. Oberflächenteilbereiche erfolgt, wodurch bei Einsatz in einem Stempel ein korrespondierendes Zusammenwirken der Gravuranordnungen an der Stempelplatte mit den Kissenteilen erfolgen kann, sodass mittels der unterschiedlichen Gravuranordnungen an der Stempelplatte verschiedenfärbige Stempelabdrucke produzierbar sind.

Es ist von auch Vorteil, wenn die Steuer- und/oder Regelvorgänge bzw. Berechnungsvorgänge der Steuereinrichtung, beispielsweise die Festlegung der Schneidlinien bzw. Oberflächenteilbereiche, die Steuerung der Handhabungseinrichtung, usw., durch Softwaremittel erfolgen; wenn nachdem mittels der Ein- und/oder Ausgabeeinrichtung die Plattenbereiche bzw. Gravuranordnungen festgelegt wurden durch die Softwaremittel eine automatische Bereichs- bzw. Schneidlinieneinteilung zur Fertigung der Kissenteile und/oder Stempelplatte erfolgt, da somit ein automatisierter und intelligenter Fertigungsablauf der Bearbeitungsvorrichtung erreicht werden kann und in Verbindung mit einer Recheinheit, insbesondere einem Personal Computer, aufgrund von einer Bedienperson festgelegter Stempelplatten bzw. Oberflächenteilbereiche ein vollautomatischer Fertigungsprozess inklusive einem Gravurprozess der Stempelplatte und einem Einfärben der unterschiedlichen Kissenteile gestartet werden kann, wobei hierfür nur die erfindungsgemäße Bearbeitungsvorrichtung notwendig ist.

In einer vorteilhaften Ausführung erfolgt der Materialabtrag durch die Materialabtragungseinrichtung über Strahlung von einer Strahlungsquelle, insbesondere eines Laserstrahls einer Laseranordnung, wodurch ein Trennen des Stempelkissens nahezu rückstandsfrei und durch Erzeugen einer schmalen Trennfuge und einer exakten Schnittkontur ermöglicht wird.

Die Aufgabe der Erfindung wird auch eigenständig dadurch gelöst, dass die Bearbeitungsvorrichtung eine Tintenspendeeinrichtung zur bedarfsweisen Abgabe von Stempeltinte, insbesondere färbenden Fluiden, aufweist. Dabei ist es von Vorteil, dass über die Tintenspendeeinrichtung Stempeltinte auf unterschiedliche Kissenteile, die durch die Materialabtragungseinrichtung und die Handhabungseinrichtung produzierbar sind, aufgebracht werden kann und somit ein Verbundteil für Selbstfärbestempel in einfacher Weise herstellbar ist, über den mehrfärbige Stempelabdrucke produzierbar sind.

Von Vorteil ist es, wenn die Handhabungseinrichtung zur Verstellung von zumindest einer Auslassöffnung der Tintenspendeeinrichtung und der Werkstückaufnahme relativ zueinander ausgebildet ist, wodurch ein gleichmäßig verteilter Tintenauftrag auf die Kissenteile erfolgen kann.

Dadurch, dass die Tintenspendeeinrichtung eine Abgabeeinrichtung mit einer Abgabedüse für Stempeltinte aufweist bzw. zur Bildung einer der Handhabungseinrichtung zugeordneten Effektoreinheit zumindest die Abgabeeinrichtung der Tintenspendeeinrichtung und/oder der Bearbeitungskopf der Materialabtragungseinrichtung dieser zugeordnet sind und vorzugsweise an einer Halterungseinrichtung der Effektoreinheit mit dieser bewegungsgekoppelt angeordnet sind bzw. die Effektoreinheit, insbesondere die Halterungseinrichtung, über die Handhabungseinrichtung positionsverstellbar ausgebildet ist, wird in vorteilhafter Weise eine verstellbare bzw. positionierbare Einheit mit lediglich den Wirkelementen des Bearbeitungskopfes und der Abgabeeinrichtung durch Anordnung an der Halterungseinrichtung eine Effektoreinheit geschaffen, welche zur materialabtragenden Bearbeitung und zum Farbauftrag am Verbundteil ausgebildet ist und durch die Handhabungseinrichtung in bevorzugt einer XY-Ebene die gesamte Effektoreinheit mit den Wirkmitteln zur Bearbeitung des Verbundteiles verstellbar ist.

Es ist weiters vorteilhaft, wenn die Tintenspendeeinrichtung zumindest eine von Begrenzungsflächen umgrenzte Auslassöffnung zur Abgabe von Stempeltinte aufweist bzw. die Auslassöffnung an der Abgabedüse ausgebildet ist und die Auslassöffnung mit zumindest einer Aufnahmekammer für die Stempeltinte, insbesondere einem Tintenbehälter, strömungsverbunden ist, da somit ein kontrollierte Abgabe von Stempeltinte an Farbauftragepunkten auf die Kissenteile ermöglicht wird, wobei es weiters vorteilhaft ist, wenn der zumindest eine Tintenbehälter vorzugsweise stationär an einer Fertigungsanlage angeordnet ist und bevorzugt mit zumindest einer Flüssigkeitsleitung strömungsverbunden ist, wodurch an der Effektoreinheit lediglich die Abgabedüse mit der Auslassöffnung angeordnet sein kann bzw. zur Bildung der Abgabeeinrichtung ein Kupplungselement zur Aufnahme der Abgabedüse und Flüssigkeitsleitungen zur Herstellung einer Strömungsverbindung zwischen einem Tintenbehälter und der Auslassöffnung angeordnet sein kann, wodurch ein kompakte, verstellbare Bearbeitungseinheit durch die Effektoreinheit geschaffen wird, da der oder die voluminösen und schweren Tintenbehälter stationär an der Bearbeitungsvorrichtung befestigt sind und nicht von der Effektoreinheit mitverstellt bzw. positioniert werden müssen.

Es ist auch möglich, dass die Tintenspendeeinrichtung mehrere Abgabedüsen mit Auslassöffnungen aufweist bzw. die ein oder mehreren Auslassöffnungen der Abgabedüsen je mit einem Strömungskanal in Flüssigkeitsleitungen für Stempeltinte strömungsverbunden sind, wodurch für jede von Stempeltinte eine eigene Tintenzufuhr gebildet ist und eine unbeabsichtigte Vermischung von beispielsweise Rückständen einer weiteren Stempeltintenart mit aufzutragenden Stempeltinten verhindert wird.

Dadurch, dass die Tintenspendeeinrichtung eine Dosiereinrichtung zur kontrollierbaren Abgabe von Stempeltinte aufweist bzw. die Dosiereinrichtung als Druckerzeuger gebildet ist, der mit der Tintenzufuhr, insbesondere den Tintenbehältem und/oder den Flüssigkeitsleitungen und/oder dem Abgabekanal , zumindest im Bereich der Auslassöffnung wirkungsverbunden ist, wird durch ein kurzzeitiges Aktivieren des Druckerzeugers zum Anlegen eines Überdruckes in der Tintenzufuhr über die Auslassöffnung eine Tintenabgabe erreicht.

Durch die Anordnung einer Sperreinrichtung, insbesondere eines Rückschlagventils, im Bereich der Auslassöffnung in der Tintenzufuhr, insbesondere der Auslassdüse oder der Flüssigkeitsleitung, kann die Auslassöffnung gegen unbeabsichtigte Abgabe von Stempeltinte, durch flüssigkeitsdichtes Verschließen bzw. Versiegeln der Tintenzufuhr bevorzugt im Bereich der Auslassöffnung, verhindert werden.

Dadurch, dass eine Aufnahmekammer einer Auslassdüse mit mehreren Tintenzufuhren strömungsverbunden bzw. strömungsverbindbar ist, wird es ermöglicht, dass z.B. nur eine Abgabedüse angeordnet ist, die mit Aufnahmekammern von Flüssigkeitsbehältern, in denen unterschiedlichste Arten von Stempeltinte gespeichert sein können, strömungsverbindbar ist und somit durch eine Vermischung von gegebenenfalls unterschiedlichen Mengenanteilen von unterschiedlichen Arten von Stempeltinten ein Herstellen von Mischfarben, beispielsweise Farben aus den RGB oder CMYK-Farbpaletten, möglich ist.

Es ist vorteilhaft, wenn die Handhabungseinrichtung eine Führungsanordnung und eine Antriebseinrichtung zur Verstellung bzw. Positionierung der Effektoreinheit umfasst bzw. die Antriebseinrichtung mit der Steuereinrichtung zur Steuerung und/oder Regelung wirkverbunden ist und die Antriebseinrichtung zur bedarfsweisen Verstellung bzw. Bewegung des Tragarmes und/oder des Halterungseinrichtung der Effektoreinheit mittels der Führungsanordnung ausgebildet ist, da somit eine einfache und präzise Positionierung bzw. Verstellung der Effektoreinheit möglich ist.

Dadurch, dass die Steuereinrichtung eine Speichereinrichtung umfasst, in der Softwaremittel hinterlegt sind bzw. die Steuereinrichtung durch eine über eine Schnittstelle mit der Bearbeitungsvorrichtung , insbesondere der Materialabtragungseinrichtung und/oder der Handhabungseinrichtung und/oder der Tintenzufuhr, verbundene Rechnereinheit, insbesondere einen Personal Computer, gebildet ist, wird in vorteilhafter Weise eine einfache und benutzerfreundliche Daten- bzw. Parametereingabe für die Weiterverarbeitung durch die Steuereinrichtung mittels einer Recheneinheit, ermöglicht und es kann eine im Wesentlichen vollständig automatisierte Bearbeitung des Verbundteiles entsprechend der durch Softwaremittel gesteuerte Bearbeitungsschritte erreicht werden.

Durch die Verwendung einer Strahlungsquelle, insbesondere einer Laseranordnung, als Materialabtragungseinrichtung ist ein in der Abtragetiefe exakt steuerbarer, rückstandsfreier und präziser Abtragevorgang, der lediglich das Stempelkissen und nicht die Trageeinrichtung vollständig durchtrennt, möglich.

Die Erfindung wird im nachfolgenden anhand der in den Zeichnungen zum besseren Verständnis schematisch und vereinfacht dargestellten Ausführungsbeispiele näher erläutert.

Es zeigen:
- Fig. 1: eine erfindungsgemäße Bearbeitungsvorrichtung in einer Fertigungsanlage in perspektivischer Schrägansicht,
- Fig. 2: die erfindungsgemäße Bearbeitungsvorrichtung nach Fig. 1 in perspektivischer Schrägansicht;
- Fig. 3: die Bearbeitungsvorrichtung nach Fig. 2 in Detaildarstellung und Schrägansicht;
- Fig. 4: die Bearbeitungsvorrichtung nach Fig. 3 in Seitenansicht und Detaildarstellung mit einem Verbundteil in Schnittdarstellung;
- Fig. 5: eine weitere Ausführungsvariante einer Bearbeitungsvorrichtung in Detaildarstellung und Schrägansicht;
- Fig. 6: eine mögliche Gestaltung eines Aufbaus zur Steuerung bzw. Regelung der Komponenten der erfindungsgemäßen Bearbeitungsvorrichtung in schematischer Blockdarstellung;
- Fig. 7: vereinfachte Darstellung eines mittels der Bearbeitungseinrichtung festlegbaren und erzeugbaren Layouts eines Stempelplattenelementes bzw. Stempelkissens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

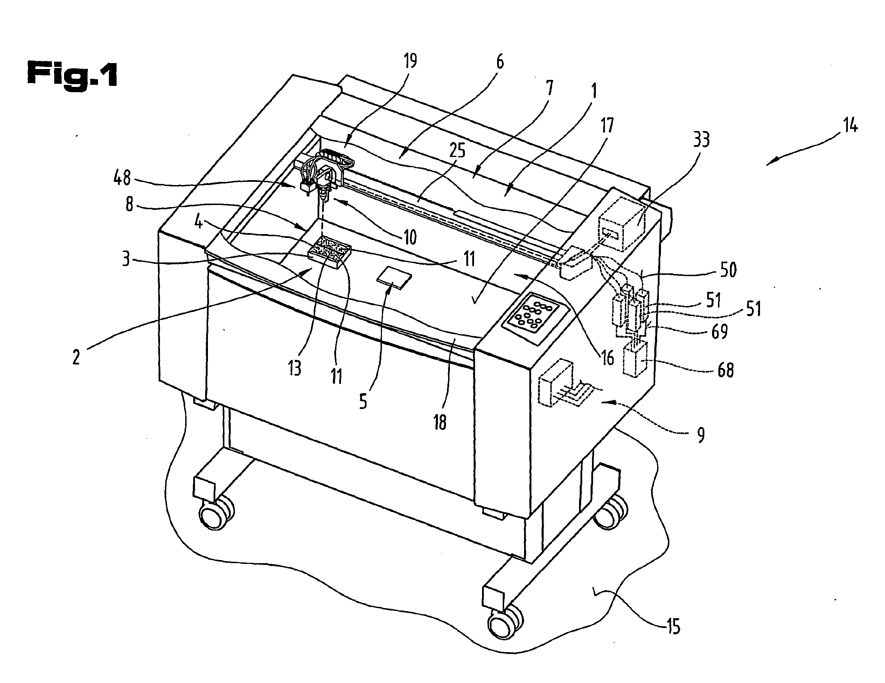

In Fig. 1 ist eine erfindungsgemäße Bearbeitungsvorrichtung 1 zur Bearbeitung zumindest von Verbundteilen 2, bestehend aus zumindest einer Trageeinrichtung 3, insbesondere einem Stempelkissenhalter, und einem Stempelkissen 4, wobei die Bearbeitungsvorrichtung 1 neben der Bearbeitung von Verbundteilen 2 auch zur Fertigung bzw. Bearbeitung von weiteren Werkstücken wie z.B. Stempelplatten 5, insbesondere Stempelplattenrohlingen, verwendbar ist, sodass nachfolgend die zu bearbeitenden Teile gegebenenfalls als Werkteile bezeichnet werden.

Zur Bearbeitung von Werkteilen weist die Bearbeitungsvorrichtung 1 zumindest eine Materialabtragungseinrichtung 6 und eine Handhabungseinrichtung 7 auf. Beispielsweise an einer Werkstückaufnahme 8 angeordnete Werkteile können somit über die Materialabtragungseinrichtung 6 bearbeitet werden, wobei der Bearbeitungsablauf über eine zumindest mit der Handhabungseinrichtung 7 verbindbaren und/oder verbundenen Steuereinrichtung 9 gesteuert und/oder geregelt wird und zumindest ein Bearbeitungskopf 10 der Materialabtragungseinrichtung 6 entsprechend von durch die Steuereinrichtung 9 vorgegebenen Signalen zur Steuerung bzw. Regelung der Handhabungseinrichtung 7 vorzugsweise relativ zu einer Werkstückaufnahme 8 bzw. dem Werkteil verstellbar, insbesondere bewegbar, ausgebildet ist.

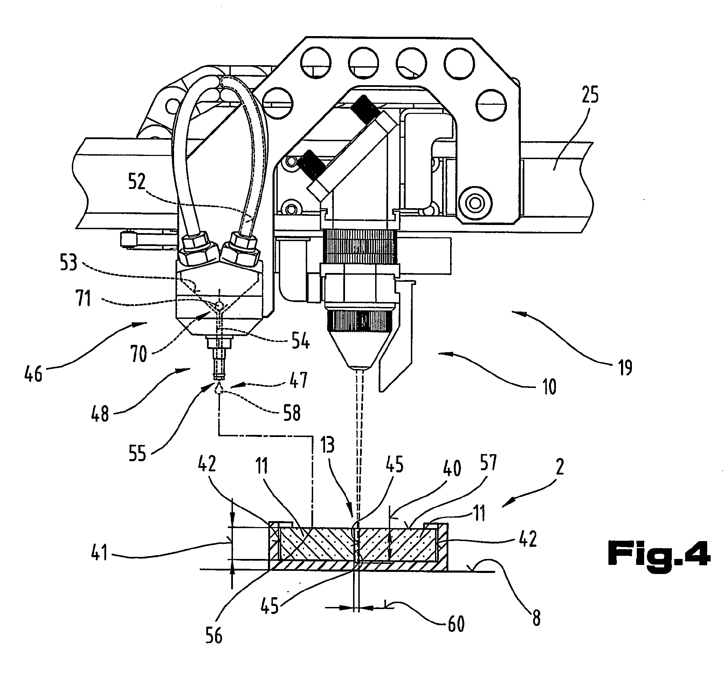

Durch eine solche Ausbildung der Bearbeitungsvorrichtung 1 ist es gemäß dem gezeigten Ausführungsbeispiel nunmehr möglich, dass ein Werkteil entsprechend der Verstellung bzw. Bewegung des Bearbeitungskopfes 10 durch die Materialabtragungseinrichtung 6 materialabtragend bearbeitet wird. Der Materialabtrag erfolgt dabei derartig, dass am Stempelkissen 4 des Verbundteiles 2 durch die Materialabtragungseinrichtung 6 bereichsweise soviel Material abgenommen wird, dass das Stempelkissen 4 in zumindest zwei separate Kissenteile 11 getrennt wird, indem die unterschiedlichen Kissenteile 11 durch eine durch den Materialabtrag entstehende Trennfuge 13 getrennt werden. Dabei ist die Trennfuge 13 am Verbundteil 2 vorzugsweise so ausgebildet, dass das Stempelkissen 4 über dessen Dicke eine durchgängige Ausnehmung bzw. Durchbrechung aufweist und die Kissenteile 11 vollumfänglich voneinander getrennt sind, wie nachstehend im Detail beschrieben und aus Fig. 4 ersichtlich.

Die Bearbeitungsvorrichtung 1 ist vorzugsweise zur Verwendung mit einer Fertigungsanlage 14 ausgebildet, wie diese in Fig. 1 dargestellt ist. Die Fertigungsanlage 14 ist dabei an einer Aufstandsfläche 15 positioniert, und weist gemäß dem gezeigten Ausführungsbeispiel weiters einen Innenraum 16 auf, in welchem durch die Bearbeitungsvorrichtung 1, insbesondere die Materialabtragungseinrichtung 6 und die Handhabungseinrichtung 7, die Bearbeitung der Werkteile erfolgt. Zur Aufnahme von Werkteilen ist im Innraum 16 ein Aufnahmeboden 17 als Werkstückaufnahme 8 ausgebildet. Es ist selbstverständlich auch möglich, dass die Werkstückaufnahme 8 durch Spann- und/oder Positioniereinrichtungen zur positionsfixierten Halterung von Werkstücken gebildet ist, wobei die Werkstückaufnahme 8 hierzu beispielsweise durch mechanische Spanneinrichtungen, wie z.B. Schraubstöcke, oder zur Positionsfixierung formschlüssige Positionierrahmen zur Aufnahme der Werkteile gebildet sein kann. Auch ist es möglich, dass die Werkstückaufnahme 8 nicht in einem Innenraum 16 sondern an einer beliebigen Oberfläche, die zur Aufnahme von Werkteilen geeignet ist, ausgebildet sein kann.

Fertigungsanlagen 14 wie diese in Fig. 1 gezeigt ist, sind bereits aus Stand der Technik bekannt, weshalb an dieser Stelle nicht näher auf die Ausgestaltung derselben eingegangen wird, wobei in Fig. 1 nur eine bevorzugte Ausführung einer Fertigungsanlage gezeigt ist, mit der die Bearbeitungsvorrichtung 1 verwendbar ist. Die Bearbeitungsvorrichtung 1 ist beispielsweise als Baueinheit zur Erweitung einer bereits bekannten Fertigungsanlage 14 gebildet, mit dieser die erfindungsgemäßen Vorteil erzielbar sind.

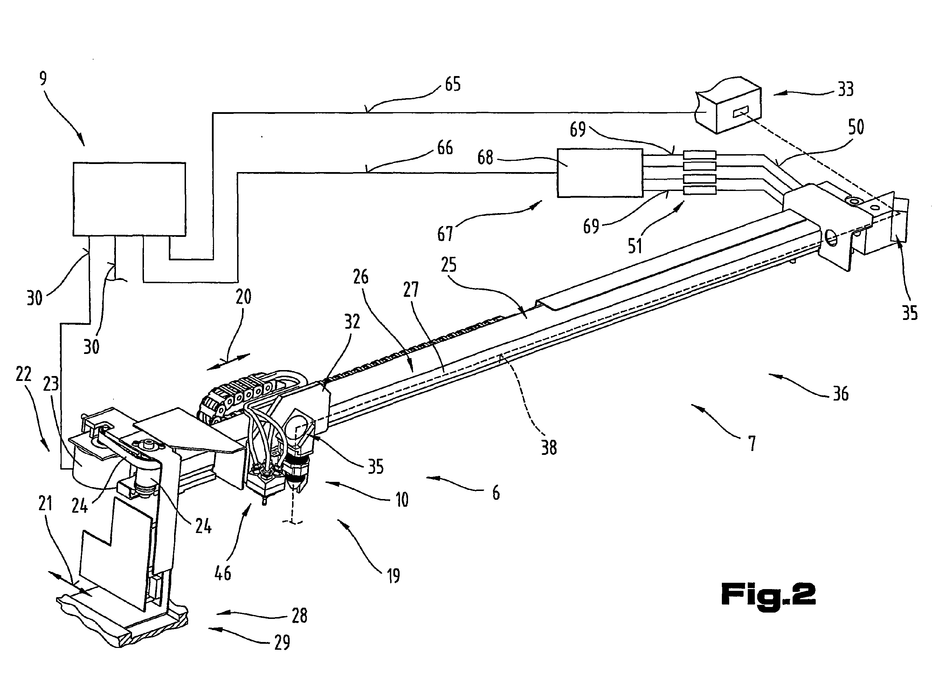

In Fig. 2 ist die Bearbeitungsvorrichtung 1 mit der Handhabungseinrichtung 7 und der Materialabtragungseinrichtung 6 gezeigt. Ausführungsgemäß ist zumindest der Bearbeitungskopf 10 ist eine von gegebenenfalls mehreren Komponenten der Effektoreinheit 19 und dieser zugeordnet.

Die Handhabungseinrichtung 7 ist zumindest zur linearen Verstellung von zumindest der Effektoreinheit 19 entlang vorzugsweise zweier Achsen in einem kartesischen Koordinatensystem gebildet, sodass die Effektoreinheit 19 zumindest in einer X-Richtung 20 und einer Y-Richtung 21 verstellbar ist. Es ist somit eine Verstellung der Effektoreinheit 19 in einer zweidimensionalen XY-Ebene, die beispielsweise parallel zum Aufnahmeboden 17 verläuft, möglich, wobei zur Steuerung und/oder Regelung der Handhabungseinrichtung 7 diese mit der Steuereinrichtung 9 verbunden ist. Zur Erzeugung einer Verstellbewegung kann die Handhabungseinrichtung 7 dabei eine Führungsanordnung 26, insbesondere eine Linearführung 27, und eine Antriebseinrichtung 22 aufweisen, wobei die Antriebseinrichtung 22 beispielsweise einen Rotationsmotor 23 und Übertragungselemente 24 aufweist. Wie in Fig. 2 dargestellt, können über als Riemen ausgebildete Übertragungselemente 24 die vom Rotationsmotor 23 erzeugte Rotationsbewegung an eine Vorrichtung zur Umwandlung einer Rotations- in eine Linearbewegung übertragen werden, beispielsweise an eine Zahnstangenanordnung oder einer Spindeltriebanordnung, wobei die Effektoreinheit 19 zweckmäßigerweise das letzte bewegliche Glied der geschaffenen kinematischen Bewegungskette darstellt und somit linear in X-Richtung 20 entlang einer an einem Tragarm 25 durch eine Linearführung 27 gebildeten Führungsanordnung 26 verstellbar ist.

Zur besseren Übersicht ist in Fig. 2 nur die Antriebseinrichtung 22 zur Verstellung der Effektoreinheit in X-Richtung 20 schematisch dargestellt und eine weitere Führungsanordnung 28 bzw. Antriebseinrichtung 29 zur Verstellung der Handhabungseinrichtung 7, insbesondere des Tragarmes 25, in Y-Richtung 21 lediglich in Bruchdarstellung schematisch angedeutet, wobei die Antriebseinrichtung 29 und Führungsanordnung 28 prinzipiell der gezeigten entsprechen kann. Es sei an dieser angemerkt, dass selbstverständlich weitere aus dem Stand der Technik bekannte Einrichtungen zur Positionierung von Gegenständen in Verbindung mit der erfindungsgemäßen Bearbeitungsvorrichtung verwendbar sind, wobei hierzu beispielsweise bahngesteuerte oder koordinaten-punkt- gesteuerte Handhabungseinrichtungen, insbesondere Manipulatoren mit zwei Freiheitsgraden zur Linearverstellung in einer Ebene, zum Einsatz kommen können.

Zur Steuerung und/oder Regelung der durch die Effektoreinheit 19 auszuführenden Bewegung in der XY-Ebene ist die Antriebseinrichtung 22, insbesondere der Rotationsmotor 23, im Ausführungsbeispiel über eine Steuerleitung 30 mit der Steuereinrichtung 9 verbunden, wobei eine weitere Steuerleitung 30 zur Steuerung und/oder Regelung der Antriebseinrichtung 29 vorgesehen sein kann. Somit kann durch die Steuereinrichtung 9 die Handhabungseinrichtung 7 zur Positionierung der Effektoreinheit 19 an jeden beliebigen Punkt innerhalb eines möglichen Bearbeitungsbereiches vorzugsweise in der XY-Ebene entlang eines Schneidpfades kontrolliert werden. Es sei an dieser Stelle lediglich die Möglichkeit erwähnt, dass die Handhabungseinrichtung 7 auch zur Verstellung innerhalb eines Dreikoordinatensystems gebildet sein kann, sodass ein räumliches Verstellen der Effektoreinheit 19 in drei Richtungen erreichbar wäre.

In einer bevorzugten Ausgestaltung der Materialabtragungseinrichtung 6 ist nur deren Bearbeitungskopf 10 verstellbar an einer Halterungseinrichtung 32 zur Bildung der Effektoreinheit 19 angeordnet, wodurch die Einrichtungen zur Erzeugung der zur Materialabnahme benötigten Energie, wie z.B. einer kinetischen-, elektrischen-, thermischen Energie, nicht an der Effektoreinheit 19 angeordnet sein müssen bzw. nicht mit dieser bewegungsgekuppelt sein müssen, sodass die durch die Handhabungseinrichtung 7 zu verstellenden Bauteile ein geringes Volumen und Gewicht aufweisen können. Wie in den Ausführungsbeispielen gezeigt, ist zu diesem Zweck die Verwendung einer Strahlenquelle 33 zur Erzeugung eines Energiestrahls 34 besonders vorteilhaft, da als Übertragungselement der Energie zum Bearbeitungskopf 10 lediglich Umlenkspiegel 35 notwendig sind und ansonsten keine weiteren Bauelemente zur Energieübertragung erforderlich sind, wobei die Strahlenquelle 33 bewegungsfest beispielsweise an einer Fertigungsanlage 14 angeordnet sein kann.

Die Anordnung zur Aufbringung eines Energiestrahles 34 ist nun bevorzugt als Laseranordnung 36 ausgebildet, die einen Laserkopf 37 aufweist, welcher der Effektoreinheit 19 zugeordnet bzw. an dieser angeordnet ist. Aufgrund des besonders hohen Wirkungsgrades hat sich die Verwendung eines CO₂- Lasers als besonders vorteilhaft erwiesen, wobei selbstverständlich auch sämtliche Festkörper-, Flüssigkeits-, Halbleiter- und Gaslaserarten verwendbar sind.

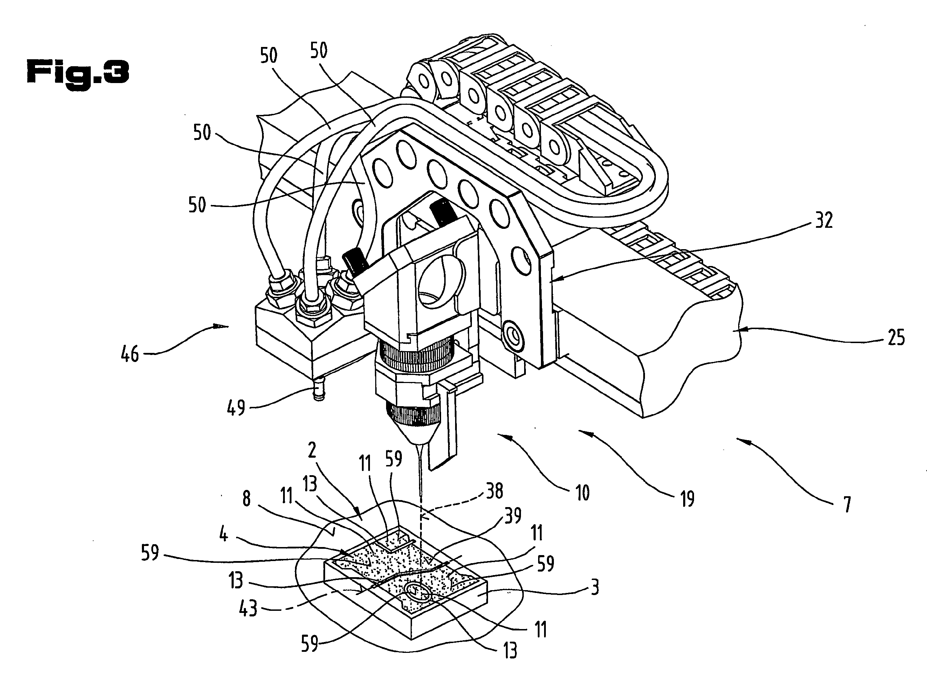

Die durch die Strahlenquelle 37 erzeugte Laserstrahlung 38 wird über die Umlenkspiegel 35 zum Laserkopf 37 übermittelt, sodass der aus dem Laserkopf 37 in Richtung des Werkteiles austretende Laserstrahl 38 beispielsweise auf eine Bearbeitungsoberfläche 39, die im Wesentlichen ebenflächig ist, an einer Stempelkissenoberseite des Verbundteiles 2 materialabtragend wirken kann (siehe Fig. 3 und 4). In aus dem Stand der Technik bekannter Weise ist im Laserkopf 37 eine Fokussierlinse zur Erzeugung eines Brennpunktes angeordnet, sodass, wie in Fig. 4 gezeigt, der Verbundteil 2 über eine Einschnitttiefe 40 durch entsprechende Fokusierung des Brennpunktes innerhalb des Verbundteiles 2, beispielsweise am untertesten Punkt der Schnitttiefe 40, sodass das Stempelkissen 4 über dessen gesamte Dicke 41 über die entstehende Trennfuge 13 in mehrere Kissenteile 11 geteilt werden kann. Die Schnitttiefe 40 kann im Wesentlichen durch Steuerung der Schnittgeschwindigkeit, der Leistung und eines Abstandes des Brennpunktes vom Bearbeitungskopf 10 eingestellt werden. Da auch der Aufbau von Laseranordnungen 36 im Detail bereits ausreichend aus dem Stand der Technik bekannt sind, wird an dieser Stelle nicht näher auf den weiteren Aufbau derselben eingegangen.

Zur Ausgestaltung der Materialabtragungseinrichtung sei noch erwähnt, dass anstelle einer Strahlenquelle 33 bzw. einer Laseranordnung 36 auch weitere, aus dem Stand der Technik bekannte Verfahren zum Abtragen von Material von einem Werkstück zur Anwendung kommen können, wobei hier zu beispielsweise mechanische Fräsverfahren, Wasserstrahlschneidverfahren, Heißdrahtschneideverfahren, usw. anwendbar sind. Weiters können zur Schaffung der Trennfugen 42 im Stempelkissen 4 Trennverfahren, wie z.B. Schneiden, zum Einsatz kommen, welche beispielsweise entlang der Trennflächen 45 das Stempelkissen 4 durch Schnitte in die Kissenteile 11 trennen, wonach zur Bildung der Trennfuge 42 ein Herausnehmen des in dieser Befindlichen Schnittteiles des Stempelkissens 4 erfolgt. Hierzu können beispielsweise mechanische Schneidplotter mit Schneidmessem verwendet werden.

Wie nun insbesondere aus den Fig. 3 und 4 ersichtlich, erfolgt die Teilung des Stempelkissens 4 in mehrere Kissenteile entlang Schneidlinien 43 über die Trennfugen 13. Die Schneidlinien 43 sind dabei nicht auf eine Form beschränkt, sondern können wie gezeigt kreisförmig, kreisbogenförmig, gerade usw. an der Bearbeitungsoberfläche 39 des Verbundteiles 2 verlaufen, wobei die Schneidlinien 43 durch die Steuereinrichtung 9 festgelegt werden und zumindest der Bearbeitungskopf 10, insbesondere die Effektoreinheit 19 entsprechend der Schneidlinien 43 relativ zur Werkstückaufnahme 8, insbesondere der Bearbeitungsoberfläche 39 des Verbundteiles 2, zum Materialabtrag entlang der Schneidlinie 43 verstellt bzw. bewegt wird. Diese Verstellung bzw. Bewegung der Handhabungseinrichtung 7 und der Materialabtrag durch die Materialabtragungseinrichtung 6 wird dabei von der Steuereinrichtung 9 gesteuert und/oder geregelt. Somit kann erreicht werden, dass über die Dicke 41 des Stempelkissens 4 entlang der Schneidlinien 43 zur Bildung der Trennfugen 13 über eine Bearbeitungszone durchgängig Material des Stempelkissens 4 abgenommen bzw. abgetragen wird und dadurch an den Kissenteilen 11 jeweils sich gegenüberliegende, über die Trennfuge 13 voneinander distanzierte, Trennflächen 45 gebildet werden, sodass durch Umfangsflächen 44 und Trennflächen 45 umfangsseitig vollständig voneinander getrennte Kissenteile 11 gebildet werden. Die Trennfugen 13 sind entlang der diese begrenzenden Trennflächen 45 an den Kissenteilen11 sind gegenüber den gegebenenfalls in den Kissenteilen 11 befindlichen Stempeltinten zumindest annähernd flüssigkeitsdicht begrenzt, sodass eine Vermischung von unterschiedlichen Arten von Stempeltinte vermieden werden kann.

An der Trageeinrichtung 3 kann bei diesem Scheidvorgang auch ein Materialabtrag erfolgen, insbesondere wenn sich Haltefortsätze in Richtung des Stempelkissens 4 zur Halterung desselben an der Trageeinrichtung 3 erstrecken (siehe Verbundteil 2 in Fig. 3), um eine vollständige Trennung der Kissenteile 11 zu ermöglichen.

Damit ein Zuführen bzw. Auftragen von Stempeltinte zu den Stempelkissenteilen 11 möglich ist, weist die Bearbeitungsvorrichtung 1 eine Tintenspendeeinrichtung 46 auf, die zur bedarfsweisen Abgabe von Stempeltinte 47, insbesondere färbenden Fluiden, gebildet ist. Wie gemäß dem Ausführungsbeispiel dargestellt, weist die Tintenspendeeinrichtung 46, zumindest eine Abgabeeinrichtung 48 auf, die zumindest eine Abgabedüse 49 aufweist.

Vorzugsweise ist die Tintenspendeeinrichtung 46, wie dies in den gezeigten Ausführungsbeispielen dargestellt ist, ausgangsseitig durch zumindest eine Abgabeeinrichtung 48 für Stempeltinte 47, und eine Tintenzufuhr, insbesondere ein oder mehrere Flüssigkeitsleitungen 50 zur Zufuhr von Stempeltinte 47 zur Abgabeeinrichtung 48 und ein oder mehreren Tintenbehältem 51 (siehe Fig. 1), gebildet. Die Zufuhr von Stempeltinte 47 zur Abgabedüse 49 erfolgt somit über die Flüssigkeitsleitungen 50, dessen Strömungskanäle 52 eingangsseitig mit einem Innenraum zur Aufnahme von Stempeltinte 47 in den Tintenbehältern 51 strömungsverbunden sind und die ausgangsseitig beispielsweise mit einer Aufnahmekammer 53, die mit einem Abgabekanal 54 der Abgabedüse 49 verbunden ist, strömungsverbunden, wodurch über eine Auslassöffnung 55, insbesondere den Abgabekanal 54, Stempeltinte 47 abgegeben werden kann. Der Auslassöffnung 55 kann somit Stempeltinte 47 über eine oder mehrere, mit der Auslassöffnung 55 bzw. der Aufnahmekammer 53 strömungsverbundene Flüssigkeitsleitungen 50 für gegebenenfalls unterschiedliche Arten von Stempeltinten 47 zugeführt werden.

Die Flüssigkeitsleitungen 50 können zur Verformung geeignete, flexible Materialeigenschaften aufweisen, insbesondere aus elastischem Kunststoff gebildet sein, sodass die Flüssigkeitsleitungen 50 über eine an sich aus dem Stand der Technik bekannte, raupenartige Leitungstrage bzw. Leitungsführungseinrichtung, wie diese in Fig. 2 bis 5 zumindest teilweise dargestellt ist, flexibel und in einem kompakten Bündel zur Effektoreinheit 19, insbesondere der Abgabeeinrichtung 48, geführt werden können.

Es ist selbstverständlich auch möglich, dass die Auslassöffnung 55 beispielsweise direkt am Tintenbehälter 51 ausgebildet ist und der Tintenbehälter 51 direkt zur Abgabe der Stempeltinte 47 ausgebildet ist und in diesem Falle der Effektoreinheit 19 zugeordnet sein kann. Vorzugsweise ist die zumindest eine Abgabeeinrichtung 48 an der Effektoreinheit 19 zugeordnet, wobei auch eine unabhängige Verstellung der Abgabeeinrichtung 48 und des Bearbeitungskopfes 10 voneinander in einer weiteren, nicht dargestellten Ausführungsvariante möglich wäre, sodass der Bearbeitungsvorrichtung 1 mehrere Effektoreinheiten zugeordnet wären.

Durch die zuvor beschriebene, mögliche Ausbildung der Tintenspendeeinrichtung 46 mit einer Abgabeeinrichtung 48 ist es nun von Vorteil, dass die nur die Abgabeeinrichtung 48 als im Raum verstellbares Element der Tintenspendeeinrichtung 46 ausgebildet ist und die Tintenbehälter 51 vorzugsweise ortsfest an einer Fertigungsanlage 14 angeordnet sein können (siehe Fig. 1). Zur Verstellung der Effektoreinheit 19 sei angemerkt, dass diese mittels der Steuereinrichtung 9 durch eine steuerbare Sollwertvorgabe in zumindest der XY-Ebene erfolgen kann.

Gemäß der dargestellten, besonders vorteilhaften Ausbildungen, weist die Effektoreinheit 19 Abgabeeinrichtung 48 und den Bearbeitungskopf 10 auf, wobei diese mit der Halterungseinrichtung 32 verbunden, insbesondere an dieser bewegungsfest, angeordnet sind. Die Halterungseinrichtung 32 ist dabei in vorstehend beschriebener Weise mittels der Handhabungseinrichtung 7 vorzugsweise in einer XY-Ebene verstellbar ausgebildet. Durch eine solche Ausgestaltung kann eine Effektoreinheit 19 gebildet werden, die sämtliche auf den Verbundteil 2 bzw. einen Werkteil einwirkenden Wirkmittel, insbesondere den Bearbeitungskopf 10 und die Effektoreinheit 19, aufweist, und somit die Handhabung dieser Komponenten durch Ausbildung einer Baueinheit an der Effektoreinheit 19 möglichst kompakt und einfach gehalten werden kann.

Durch die zumindest in der XY-Ebene verstellbare Abgabeeinrichtung 48 für Stempeltinte 47 ist es nunmehr möglich, dass Stempeltinte 47 an Auftragepunkten 56 auf die Kissenoberseite 57 des Stempelkissens 4 bzw. der Kissenteile 11 aufgetragen wird. Bevorzugt erfolgt das Auftragen bzw. Versehen der Kissenteile 11 mit Stempeltinte 47 über Tintentropfen 58, die auf ein oder mehrere Tintenauftragepunkte 56 auf die Kissenoberseite 57 aufgetropft werden, wobei die Auslassöffnung 55 der Abgabedüse 49 beispielsweise im Wesentlichen senkrecht über einem Tintenauftragepunkt 56 am Kissenteil 11 positioniert wird und anschießend ein Abgeben eines Tintentropfen 58 erfolgen kann, also vorzugsweise zumindest die Abgabedüse 49, insbesondere die Auslassöffnung 55, der Tintenspendeeinrichtung 46 mittels der Handhabungseinrichtung 7 zur Abgabe von Stempeltinte 57 an Tintenauftragpunkte 52 über dem entsprechenden Kissenteil 11 positioniert wird. Es ist somit ein dosiertes und gleichmäßiges Abgeben von Stempeltinte 47 an die Kissenteile 11 möglich, wie dies an nachstehender Stelle genauer beschrieben wird.

Zur Bearbeitung des Verbundteiles 2 durch die Bearbeitungseinheit 1 ist nun folgender, bevorzugter Verfahrensablauf möglich, bei dem über die Materialabtragungseinrichtung 6, insbesondere die Laseranordnung 36 durch Materialabtrag entlang der Schneidlinien 43 Trennfugen 13 geschaffen werden und somit das Stempelkissen 4 in mehrere, einzelne Kissenteile 11 geteilt wird. Nach erfolgter Trennung des Stempelkissens in die Kissenteile 11 kann nun über die Tintenspendeeinrichtung 46 jedes der Kissenteile 11 mit einer Stempeltinte 47 versehen werden, wobei hierbei vorzugsweise verschiedene Arten von Stempeltinten, insbesondere verschiedenfärbige Stempeltinten 47, auf unterschiedliche Kissenteile 11 aufgetragen werden, sodass durch die unterschiedlichen Kissenteile 11 ein Stempelkissen 4 mit Bereichen, in denen unterschiedliche Arten von Stempeltinte 47 gespeichert sind, ausbilden. Das Stempelkissen 4 ist dabei vorzugsweise in aus dem Stand der Technik bekannter Weise ausgebildet, und zur Aufnahme bzw. Speicherung von Stempeltinte 47 und bei Kontaktierung des Stempelkissens 4 beispielsweise an der Kissenoberseite 57 zur Abgabe bzw. zum Abfärben auf das entsprechende Objekt, insbesondere eine Stempelplatte 5, geeignet.

Es ist somit erstmals möglich, dass über eine Bearbeitungsvorrichtung 1 ein mehrfärbiges Stempelkissen 4 automatisiert und ohne Umspannarbeiten bzw. Werkzeugumrüstungsarbeiten hergestellt werden kann, wobei gleichzeitig die Anzahl, Form und die Art der durch die Kissenteile 11 zu speichernden Stempeltinte 47 festlegbar ist.

Um einen möglichst automatisierten und selbsttätigen Fertigungsablauf durch die Bearbeitungsvorrichtung 1 zu erreichen, werden durch die der Bearbeitungsvorrichtung 1 zugeordneten Steuereinrichtung 9 zumindest zwei Oberflächenteilbereiche 59, vorzugsweise an der Kissenoberseite 57, festgelegt, sodass in den aneinandergrenzenden Oberflächenteilbereichen 59 die Schneidlinien 43 festgelegt werden, entlang welcher nachfolgend ein Materialabtrag erfolgen soll. Die Oberflächenteilbereiche 59 entsprechend dabei den Flächenabschnitten an der Kissenoberseite 57, über welche unterschiedliche Arten von Stempeltinte 47, insbesondere unterschiedliche Arten von Stempeltinte, abgegeben werden sollen. Sind diese Oberflächenteilbereiche 59, insbesondere verschiedenfarbige Flächenabschnitte festgelegt, erfolgt die Teilung in die Kissenteile 11, wobei - wie in Fig. 4 dargestellt - die Trennflächen 45 der Trennfugen 13 bevorzugt im wesentlichen senkrecht auf die Kissenoberseite 57 stehend erzeugt werden und ein Abstand 60 zwischen den Trennflächen 45 möglichst gering gehalten wird.

Der Abstand 60 kann vorzugsweise ca. 1mm, beispielsweise zwischen 0.1mm und 2mm, betragen, wobei die Herstellung dieses Abstandes 60 der Trennflächen 45 gegebenenfalls durch mehrere, benachbarte Schneidlinien 43 realisiert wird. Die benachbarten Schneidlinien 43 sind dabei beispielsweise um einen Abstand voneinander distanziert, sodass nach den erfolgten Schneidvorgängen entlang aller Schneidlinien 43 der gewünschte Abstand 60 zwischen den Trennflächen 45 der Trennfuge 13 erreicht wird. Beispielsweise können drei Schneidlinien 43 um einen Abstand von ca. 0,3mm voneinander distanziert angeordnet sein, um nach dem Schneidvorgang den Abstand 60 von ca. 1mm zu erlangen. Der Abstand 60 sollte so groß sein, dass ein Vermischen von Stempeltinten 47 unterschiedlicher Kissenteile 11 aufgrund der Distanz nicht bzw. nur geringfügig eintreten kann. Durch einen möglichst geringen Materialabtrag über den Abstand 60 ist es von Vorteil, dass nur wenig Fläche der Kissenoberseite 57 wegfällt und nahezu die gesamte Kissenoberseite zur Abgabe von Stempeltinte geeignet ist, beispielsweise über 90 % der Kissenoberseite 57. Es sei auch die Möglichkeit eines Abtrages von Teilbereichen entsprechend eines großflächigen Bereichs der Kissenoberseite 57 am Stempelkissen 4 erwähnt.

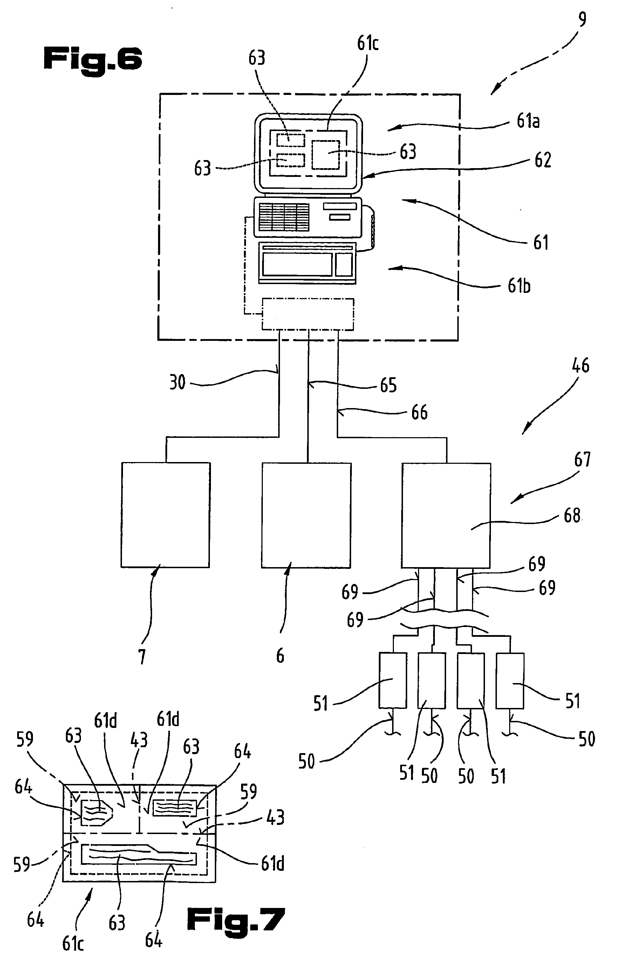

Wie in Fig. 2 und 6 dargestellt, ist der Steuereinrichtung 9 eine Ein- und/oder Ausgabeeinrichtung 61 zugeordnet oder die Steuereinrichtung 9 als Teil der Ein- oder Ausgabeeinrichtung ausgebildet, wobei die Ein- und/oder Ausgabeeinrichtung 61 bevorzugt als Recheneinheit 62, insbesondere als Personal Computer bzw. Mikroprozessorsteuerung, ausgebildet ist. Mittels dieser Ein- und/oder Ausgabeeinrichtung 61 kann in einfacher und benutzerfreundlicher Weise die Einteilung der Oberflächenteilbereiche 59 an der Kissenoberseite 57 vorgenommen werden, in der Weise, dass an einer Ausgabeeinrichtung 61a, insbesondere einem Bildschirm, eine Abbildung 61c, insbesondere einer Stempelplatte 5, visualisiert wird und über eine Eingabeeinrichtung 61b der Abbildung 61c unterschiedliche Teilbereiche 63 zugeteilt werden können.

Die Fig. 6 zeigt einen stark vereinfachten, prinzipiellen Aufbau einer Steuereinrichtung 9 in Verbindung mit Komponenten der Bearbeitungseinrichtung 1, und es ist in der Fig. 7 ein Beispiel eines an einer Ein- und/oder Ausgabeeinrichtung 61 visualisierten Stempelplattenlayouts durch die Abbildung 61 c schematisch dargestellt.

Diese Zuteilung der Teilbereiche 63 kann beispielsweise durch Festlegen von Gravuranordnungen an einer als Stempelplattenunterseite visualisierten Abbildung 61c erfolgen, wobei die Gravuranordnungen in ihrer Form vorzugsweise frei gestaltbar sind und die letztendlich durch die entsprechende Gravuranordnung abzudruckende Farbe durch die gefertigte Stempelplatte 5 bzw. das Stempelkissen 4 an der Ein- und/oder Ausgabeeinrichtung 61 festlegbar ist, also das Layout eines mehrfarbigen Stempels bestimmbar ist.

In Fig. 7 ist nun zum besseren Verständnis ein solches Stempellayout durch eine Abbildung 61 c dargestellt, bei dem die unterschiedlichen Schneidlinien 43, zum Trennen des Stempelkissens 4 in die Kissenteile 11, und Schneidlinien 64, zum Ausschneiden der Teilbereiche 63 bzw. der Stempelplatte 5 aus einem Stempelplattenrohling, eingetragen sind. Die Festlegung aller Schneidlinien 5, 64 erfolgt vorzugsweise automatisch, nachdem an der visualisierten Stempelplatte 5 die Gravuranordnungen bzw. durch diese abzudruckende Farben individuell durch eine Bedienperson bestimmt wurden und/oder eine bereits festgelegte Einteilung von Gravuranordnungen aus einem Speicher zur erneuten Verwendung geladen wurden.

Entsprechend der festgelegten Teilbereiche 63 bzw. Gravuranordnungen an der Abbildung 61c werden zur Kissenteil-Herstellung Oberflächenteilbereiche 59 durch die Steuereinrichtung 9, insbesondere die Recheneinheit 62, ermittelt und der Kissenoberseite 57 zugeteilt.

Entsprechend der an der Ein- und/oder Ausgabeeinrichtung 61, insbesondere der Abbildung 61c, festgelegten Teilbereiche 63, insbesondere Gravuranordnungen, kann nun auch eine Bearbeitung einer Stempelplatte 5, beispielsweise eines Stempelplattenrohlings, erfolgen, wodurch mittels der Materialabnahmeeinrichtung 6, insbesondere der Laseranordnung 36, ein erzeugen von erhabenen Gravuren zur Herstellung der Stempelplatte 5 erfolgt, beispielsweise in der Art wie ein solcher Gravurvorgang aus dem Stand der Technik bekannt ist.

Vorzugsweise werden somit entsprechend der Anzahl und Form der Teilbereiche 63 bzw. Gravuranordnungen, also einem an der Ein- und/oder Ausgabeeinrichtung 61 festgelegten Stempellayout, durch die Steuereinrichtung die Oberflächenteilbereiche 59 bzw. Schneidlinien 43 am Stempelkissen 4 ermittelt, wonach das Trennen des Stempelkissens 4 in die Kissenteile 11 erfolgt. Die unterschiedlichen Kissenteile 11 werden anschließend vorzugsweise entsprechend von festgelegten Farbattributen an den Teilbereichen 63 bzw. Gravuranordnungen an der Ein- und/oder Ausgabeeinrichtung 61 mit unterschiedlichen Arten von Stempeltinte 47 versehen, wobei in einem weiteren Verfahrensschritt auch eine durch die Steuereinrichtung 9 kontrollierte Fertigung einer gravierten Stempelplatte 5 entsprechend der vorgegebenen Parameter an der Ein- und/oder Ausgabeeinrichtung 61 erfolgen kann.

Zur Bearbeitung von Stempelplatten 5 sei angemerkt, dass die Teilbereiche 63, in denen die Gravuranordnungen, insbesondere ein Text, Schriftzug, grafische Darstellung, usw., ausgebildet sind bzw. werden durch die Materialabtragungseinrichtung 6 so bearbeitet werden können, dass die Teilbereiche 63 gegenüber den zu diesen benachbarten Zwischenbereichen 61 d leicht erhöht ausgebildet sein können und/oder vorzugsweise ein Ausscheiden der Teilbereiche 63 entlang der Schneidlinie 64 erfolgt. Es können dabei Verbindungsstege zwischen den Teilbereichen 63 und den diese umgrenzenden Zwischenbereichen 61d entlang der Schneidlinie 64 stehen bleiben, und es wird die gesamte Stempelplatte 5 vorzugsweise rechteckförmig in der Größe einer Stempelplattenaufnahme im eines Stempels ausgeschnitten, um die Stempelplatte 5 exakt in einem Stempel positionieren zu können, wodurch im weiterer Folge ein exakter und korrekter Farbauftrag auf die Gravuren an der Stempelplatte 5 ermöglicht wird. Nach der Positionierung und Fixierung, insbesondere dem Einkleben, der Stempelplatte 5 in einem Stempel kann nun der Zwischenbereich 61d, der sich zwischen den Teilbereiche 63 erstreckt, von der Stempelplattenaufnahme abgezogen werden, was durch bei dem Abziehvorgang brechende Verbindungsstege ermöglicht wird. Somit kann eine unbeabsichtigte Farbvermischung an benachbarten Teilbereichen 63 an der Stempelplatte 5 vermieden werden, da die flächige Verbindung der Teilbereiche 63, entlang der ein Zusammenfließen von Farbe möglich wäre, entfernt wurde.

Durch die Rechnereinheit 62 in Verbindung mit auf dieser betriebenen Softwaremitteln wird in einfacher Weise erreicht, sodass die Steuer- und/oder Regelvorgänge bzw. Berechnungsvorgänge der Steuereinrichtung 9 durch speziell zur Steuerung bzw. Regelung der Bearbeitungsvorrichtung 1 ausgebildete Softwaremittel, insbesondere einem Layoutprogramm und einem Steuerungsprogramm, erfolgen kann. Dazu kann die Steuereinrichtung 9 zur Steuerung und/oder Regelung der Materialabtragungseinrichtung 6 über eine Steuerleitung 65 mit dieser verbunden sein, die bereits vorstehend beschrieben die Handhabungseinrichtung 7 über Steuerleitungen 30 mit der Steuereinrichtung 9 verbunden sein und über Steuerleitungen 66 die Tintenspendeeinrichtung 46 mit der Steuereinrichtung 9 steuer- und/oder regelbar verbunden sein. Wie in Fig. 6 strichpunktiert dargestellt, kann die Steuereinrichtung 9 und/oder die Bearbeitungseinrichtung 1 eine oder mehrere elektronische Schnittstellen umfassen, über die die erfindungsgemäße Bearbeitungseinrichtung 1 und deren Komponenten mit der Steuereinrichtung 9 zur Daten und/oder Signalübertragung verbindbar sind. Somit können bereits in an Fertigungsanlagen 14 verwendete Steuereinrichtungen 9 mit der Bearbeitungseinrichtung 1 verwendet werden und beispielsweise durch eine Softwareerweiterung an der Steuereinrichtung 9 diese zur Steuerung der Bearbeitungseinrichtung 1 vorbereitet werden kann.

Weiters ist es möglich, dass eine Dosiereinrichtung 67 der Tintenspendeeinrichtung 46 zur Steuerung bzw. Regelung der abzugebenden Art von Stempeltinte 47 und/oder der Mengen von abzugebender Stempeltinte 47 über ein oder mehrere Auslassöffnungen 55 über die Steuerleitung 66 mit der Steuereinrichtung 9, insbesondere zur elektronischen Signal und/oder Datenübertragung, verbunden ist. Die Dosiereinrichtung 67 kann dabei aus dem Stand der Technik bekannten Vorrichtungen, wie z.B. durch Piezoelemente als Ausstoßeinrichtungen, gebildet sein, wobei jedoch in der dargestellten, bevorzugten Ausführungsvariante die Dosiereinrichtung 67 durch einen Druckerzeuger 68 gebildet ist.

Durch die Dosiereinrichtung 67 kann somit zumindest im Bereich des Abgabekanals 54 zumindest auf Mengenanteile von Stempeltinte 57 eine Kraft ausgeübt werden, welche zum Ausstoß von Tintentropfen 58 aus der Auslassöffnung 55 führt. Vorzugsweise ist der Druckerzeuger 68 über Leitungen 69 mit den Tintenbehältem 51 pneumatisch wirkungsverbunden, sodass in den Tintenbehältem 51 und/oder den Strömungskanälen 52 der Flüssigkeitsleitungen 50 zumindest kurzzeitig ein Überdruck angelegt werden kann, wodurch ein Ausstoß der Stempeltinte 47 aus der Auslassöffnung 55 erfolgt.

Es ist weiters möglich, dass vorzugsweise im Bereich des Abgabekanals 54 und/oder in den Strömungskanälen 52 ein Sperrelement 70, insbesondere ein Rückschlagventil 71, angeordnet ist- siehe Fig. 4 -, welches bei Umgebungsdruck bzw. Unterdruck, insbesondere einem Druck niedriger als ein zum durchlässigen Öffnen einer Sperreinrichtung notwendiger Freigabedruck, in den Strömungskanälen 52 bzw. der Aufnahmekammer 53 in einer den Abgabekanal 54 flüssigkeitsdicht versiegelnden Stellung positioniert ist und beispielsweise bei angelegtem Überdruck in eine flüssigkeitsdurchlässige Freigabestellung verbringbar ist, sodass Stempeltinte 47 bzw. Tintentropfen 58 abgegeben werden können.

Zur Aufbringung von Stempeltinte 47 auf die Kissenteile 11 sei noch angemerkt, dass dies bevorzugt an mehreren Tintenauftragepunkten 56 an der Kissenoberseite 57 erfolgt, indem beispielsweise rasterförmig mehrere Auftragepunkte durch die Abgabeeinrichtung 48 angefahren werden und entsprechend der Steuereinrichtung 9 vorgegebener Steuersignale an die Dosiereinrichtung 67 ein Auftragen von ein oder mehreren, gegebenenfalls unterschiedliche Flüssigkeitsmenge aufweisenden, Tintentropfen 58 erfolgt. Durch diese Raster- bzw. Matrixförmige Aufbringung von Tintentropfen 58 auf die Kissenoberseite 57 wird in den unterschiedlichen Teilbereichen der Kissenteile 11 vorzugsweise im Wesentlichen die gleiche Tintenmenge gespeichert, sodass bei Kontaktieren der Kissenoberseite 57 mittels einer Stempelplatte 5 ein gleichmäßiger Farbauftrag auf diese erfolgen kann, wodurch Stempelabdrucke mit gleichmäßiger Farbintensität erzeugbar sind.

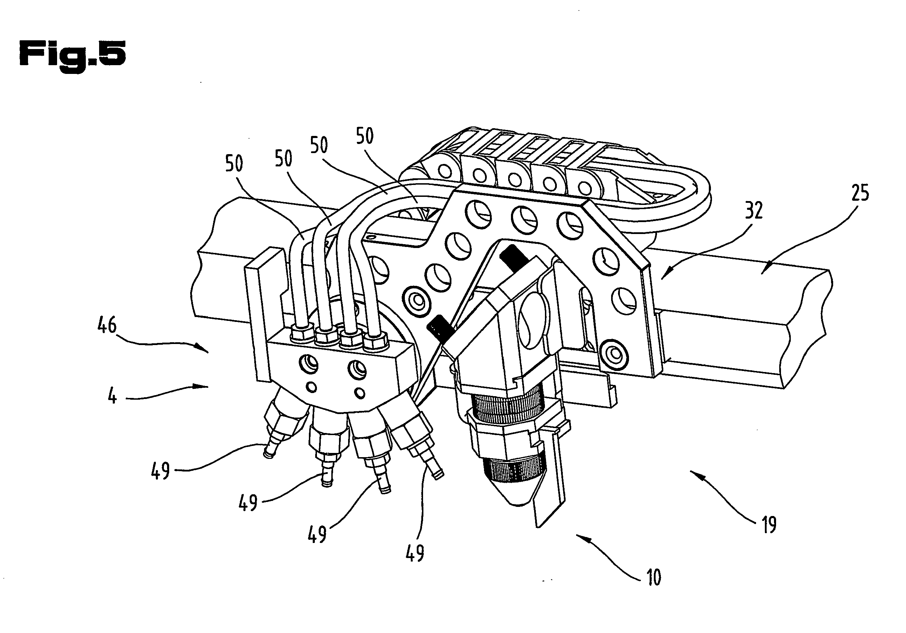

In Fig. 5 ist weiters eine besonders bevorzugte Ausführungsvariante einer Tintenspendeeinrichtung 46 dargestellt. Dabei weist die Abgabeeinrichtung 48 mehrere Abgabedüsen 49 auf, von denen bevorzugt jede der Abgabedüsen 49 zum Farbauftrag auf das Stempelkissen 4 von jeweils einer einzelnen Art einer Stempeltinte 47 ausgebildet ist und die Abgabedüsen 49, insbesondere dessen Auslassöffnungen 55, zweckmäßigerweise mit jeweils einem Strömungskanal 52 einer Flüssigkeitsleitung 50 strömungsverbunden sind. Dies bringt den Vorteil mit sich, dass keine unerwünschte Vermischung von verschiedenartigen Stempeltinten 47 erfolgen kann, und somit keine Lösungsmittel zur artenreinen Haltung der beispielsweise in Fig. 4 gezeigten Aufnahmekammer 53 von Nöten sind.

Es sei jedoch auch die Möglichkeit erwähnt, dass durch mehrere, mit einer Aufnahmekammer 53 einer Abgabedüse 49 strömungsverbundene Flüssigkeitsleitungen 52 für unterschiedliche Arten von Stempeltinten 47 eine beabsichtigte, mengendosierbare Vermischung von unterschiedlichen Grundfarben, beispielsweise rot, grün und blau, erfolgen kann, sodass durch anteilsmäßige Stempeltintenvermischung, insbesondere additive Farbmischung, beispielsweise Farben des gesamten Farbspektrums bzw. der Farbpalette der RGB-, CMYK-Farben, usw. auf die Kissenteile aufgetragen werden können.

Es ist auch möglich, dass die Trennfugen 42 nach deren Herstellung mit einem Trennmaterial versehen bzw. ausgefüllt werden, wodurch eine gegenseitig abdichtende, zuverlässige Abtrennung der unterschiedlichen Kissenteile 11 erreicht wird. Die Abgabe des Trennmaterials kann z.B. über eine verstellbare Abgabeeinheit an der Effektoreinheit 19 erfolgen, wobei die Steuer- und/oder Regelung der Abgabeeinheit bzw. die Vorgehensweise des Ausfüllens analog zu den beim Stempeltintenauftrag beschriebenen Möglichkeiten sein kann. Als Trennmaterial kann beispielsweise Kleber, Dichtmasse, usw. wie aus dem Stand der Technik bekannt verwendet werden. Nach dem Ausfüllen der Trennfugen 42 mit dem Trennmaterial kann der Farbauftrag auf die Kissenteile 11 erfolgen.

Die Ausführungsbeispiele zeigen mögliche Ausführungsvarianten der Bearbeitungsvorrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Bearbeitungsvorrichtung 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2, 3, 4; 5; 6; 7 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Bearbeitungsvorrichtung
- 2: Verbundteil
- 3: Trageeinrichtung
- 4: Stempelkissen
- 5: Stempelplatte

- 6: Materialabtragungseinrichtung
- 7: Handhabungseinrichtung
- 8: Werkstückaufnahme
- 9: Steuereinrichtung
- 10: Bearbeitungskopf

- 11: Kissenteil
- 13: Trennfuge
- 14: Fertigungsanlage
- 15: Aufstandsfläche

- 16: Innenraum
- 17: Aufnahmeboden
- 18: Deckel
- 19: Effektoreinheit
- 20: X-Richtung

- 21: Y-Richtung
- 22: Antriebseinrichtung
- 23: Rotationsmotor
- 24: Übertragungselement
- 25: Tragarm

- 26: Führungsanordnung
- 27: Linearführung
- 28: Führungsanordnung
- 29: Antriebseinrichtung
- 30: Steuerleitung

- 32: Halterungseinrichtung
- 33: Strahlenquelle
- 34: Energiestrahl
- 35: Umlenkspiegel

- 36: Laseranordnung
- 37: Laserkopf
- 38: Laserstrahl
- 39: Bearbeitungsoberfläche
- 40: Schnitttiefe

- 41: Dicke
- 43: Schneidlinie
- 44: Umfangsfläche
- 45: Trennfläche

- 46: Tintenspendeeinrichtung
- 47: Stempeltinte
- 48: Abgabeeinrichtung
- 49: Abgabedüse
- 50: Flüssigkeitsleitung

- 51: Tintenbehälter
- 52: Strömungskanal .
- 53: Aufnahmekammer
- 54: Abgabekanal
- 55: Auslassöffnung

- 56: Auftragepunkt
- 57: Kissenoberseite
- 58: Tintentropfen
- 59: Oberflächenteilbereich
- 60: Abstand

- 61: Ein- und/oder Ausgabeeinrichtung
- 61 a: Ausgabeeinrichtung
- 61b: Eingabeeinrichtung
- 61c: Abbildung
- 61d: Zwischenbereich

- 62: Recheneinheit
- 63: Teilbereich
- 64: Schneidlinie
- 65: Steuerleitung

- 66: Steuerleitung
- 67: Dosiereinrichtung
- 68: Druckerzeuger
- 69: Leitung
- 70: Sperrelement

- 71: Rückschlagventil

## Patentansprüche

1. Verfahren zur maschinellen Bearbeitung zumindest von aus einer Trageeinrichtung (3) und einem Stempelkissen (4) gebildeten Verbundteilen (2) mittels einer Bearbeitungsvorrichtung (1), bei dem zur Bearbeitung des Verbundteiles (2) zumindest ein Bearbeitungskopf (10) einer Materialabtragungseinrichtung (6) und der Verbundteil (2) durch eine von einer Steuereinrichtung (9) gesteuerten und/oder geregelten Handhabungseinrichtung (7) relativ zueinander, insbesondere in einer XY- Ebene, bewegt werden, und durch die Materialabtragungseinrichtung (6) ein Materialabtrag am Verbundteil (2) erfolgt, **dadurch gekennzeichnet, dass** durch die Materialabtragungseinrichtung (6) das zumindest teilweise mit der Trageeinrichtung (3) verbundene Stempelkissen (4) des Verbundteiles (2) in mehrere, über eine Trennfuge (42) voneinander beabstandete, Kissenteile (11) geteilt wird.

2. Verfahren nach Anspruch 1, **dadurch gekennzeichnet, dass** von der Steuereinrichtung (9) zumindest eine Schneidlinie (43) am Verbundteil (2), insbesondere an einer Bearbeitungsoberfläche (39), festgelegt wird und das Stempelkissen (4) entlang der Schneidlinie (43) in die Kissenteile (11) geteilt wird.

3. Verfahren nach Anspruch 1 oder 2, **dadurch gekennzeichnet, dass** über eine Dicke (41) des Stempelkissens (4) bevorzugt entlang der Schneidlinie (43) zur Bildung der Trennfuge (42) durchgängig Material abgetragen wird und somit ein Verbundteil (2) mit nicht zusammenhängenden Kissenteilen (11) gefertigt wird.

4. Verfahren nach einem oder mehreren der vorhergehenden Ansprüche, **dadurch gekennzeichnet, dass** nach dem Trennen des Stempelkissens (4) in mehrere Kissenteile (11) diese bevorzugt durch eine Tintenspendeeinrichtung (46) mit Stempeltinte (47) bzw. färbenden Fluiden versehen werden.

5. Verfahren nach Anspruch 4, **dadurch gekennzeichnet, dass** die Kissenteile (11) mit unterschiedlichen und/oder gleichartigen, insbesondere verschiedenfärbige und/oder gleichfarbige, Stempeltinten (47) bzw. färbenden Fluiden versehen werden.

6. Verfahren nach einem oder mehreren der Ansprüche 4 oder 5, **dadurch gekennzeichnet, dass** eine Tintenabgabe der Tintenspendeeinrichtung (46) in Form von Tintentropfen (58) erfolgt, die über ein oder mehrere Auslassöffnungen (55) in Richtung von zumindest einem Auftragepunkt (56) auf einen der Kissenteile (11) aufgetropft werden.

7. Verfahren nach einem oder mehreren der Ansprüche 4 bis 6, **dadurch gekennzeichnet, dass** von der Steuereinrichtung (9) mehrere Auftragepunkte (56) einer Kissenoberseite (57) des Stempelkissens (4), insbesondere rasterartig, festgelegt bzw. vorgegeben werden.

8. Verfahren nach einem oder mehreren der Ansprüche 4 bis 7, **dadurch gekennzeichnet, dass** verschiedenartige Stempeltinten (47) für die unterschiedlichen Kissenteile (11) jeweils über unterschiedliche Auslassöffnungen (55), die jeweils mit getrennten Aufnahmekammern in Stempeltintenbehältern (51) strömungsverbunden sind, abgegeben werden und/oder verschiedenartigen Stempeltinten (47) für die unterschiedlichen Kissenteile (11) über eine einzelne Auslassöffnung (55), die mit mehreren unterschiedlichen Aufnahmekammern in Stempeltintenbehältern (51) für verschiedenartige Stempeltinten (47) verbindbar ist, abgegeben werden.

9. Verfahren nach einem oder mehreren der Ansprüche 4 bis 8, **dadurch gekennzeichnet, dass** mehrere, verschiedenartige, insbesondere verschiedenfärbige, Stempeltinten (47) vermischt werden und durch eine dosierbare, beispielsweise additive, Vermischung der Stempeltinten (47) weitere Arten bzw. Farben, insbesondere aus der Palette der RGB-, CMYK-Farben usw., von Stempeltinten (47) zum Auftrag auf die Kissenteile (11) erzeugt werden.

10. Verfahren nach einem oder mehreren der Ansprüche 4 bis 9, **dadurch gekennzeichnet, dass** zumindest die Auslassöffnung (55), insbesondere eine Auslassdüse, der Tintenspendeeinrichtung (46) zur Tintenabgabe auf die unterschiedlichen Auftragepunkte (56), bevorzugt an Rasterpunkten, positioniert wird.

11. Verfahren nach einem oder mehreren der Ansprüche 4 bis 10, **dadurch gekennzeichnet, dass** an den Auftragepunkten (56) ein gepulster Tintenauftrag durch je ein oder mehrere Tintentropfen (58) erfolgt.

12. Verfahren nach einem oder mehreren der Ansprüche 4 bis 11, **dadurch gekennzeichnet, dass** mittels kurzzeitig angelegtem Überdruck, insbesondere eines Druckstoßes, zumindest im Bereich der Auslassöffnung (55), bevorzugt in den Tintenbehältern (51), eine Abgabe der Stempeltinte (47) durch einen Flüssigkeitsausstoß aus der zumindest einen Auslassöffnung (55) erfolgt.

13. Verfahren nach einem oder mehreren der Ansprüche 4 bis 12, **dadurch gekennzeichnet, dass** die Auslassöffnung (55) mittels einer, durch Kraftbeaufschlagung in Durchlassstellung verbringbaren und im Normalzustand vorzugsweise in Schießstellung befindlichen, Sperreinrichtung (70), insbesondere einem Rückschlagventil (71), gegenüber einer unbeabsichtigten Tintenabgabe abgedichtet wird.

14. Verfahren nach einem oder mehreren der vorhergehenden Ansprüche, **dadurch gekennzeichnet, dass** zumindest eine Effektoreinheit (19), die vorzugsweise zumindest eine Abgabeeinrichtung (48) der Tintenspendeeinrichtung (46) und den Bearbeitungskopf (10) der Ma-terialabtrageeinrichtung (6) umfasst, durch die Handhabungseinrichtung (7) verstellbar bzw. positionierbar ist.

15. Verfahren nach einem oder mehreren der vorhergehenden Ansprüche, **dadurch gekennzeichnet, dass** durch die Steuereinrichtung (9) an der Bearbeitungsoberfläche (39) des Verbundteiles (2), insbesondere des Stempelkissens (4), Oberflächenteilbereiche (59) festgelegt werden und/oder festlegbar, sind und wonach entsprechend dieser Oberflächenteilbereiche (59) das Stempelkissen (4) vorzugsweise in die einzelnen Kissenteile (11) getrennt wird.

16. Verfahren nach Anspruch 15, **dadurch gekennzeichnet, dass** mittels der Steuereinrichtung (9) zwischen aneinandergrenzenden Oberflächenteilbereichen (59) die Schneidlinie (43) festgelegt wird, entlang welcher zumindest die Materialabtragungseinrichtung (6) durch die Handhabungseinrichtung (7) verstellt wird.

17. Verfahren nach einem oder mehreren der vorhergehenden Ansprüche, **dadurch gekennzeichnet, dass** die Trageeinrichtung (3) für das Stempelkissen (4) und die Kissenteile (11) an einer Bodenplatte der gleichzeitig mit dem Trennvorgang des Stempelkissens (4) durch die Materialabtragungseinrichtung (6) entsprechend der Schneidlinie (43) angeritzt und/oder an Haltefortsätzen im Bereich der Bearbeitungsoberfläche (39) teilweise durchtrennt wird.

18. Verfahren nach einem oder mehreren der vorhergehenden Ansprüche, **dadurch gekennzeichnet, dass** über die durch die Steuereinrichtung (9) kontrollierte Handhabungseinrichtung (7) die Effektoreinheit (19) oder einzelne Komponenten der Effektoreinheit (19) in einer XY-Ebene, insbesondere in einem durch zwei Koordinaten gebildeten, kartesischen Koordinatensystem, verstellt und positioniert werden.

19. Verfahren nach einem oder mehreren der vorhergehenden Ansprüche, **dadurch gekennzeichnet, dass** über eine der Steuereinrichtung (9) zugeordneten Ein- und/oder Ausgabeeinrichtung (61) die Festlegung der Oberflächenteilbereiche (59) erfolgt.

20. Verfahren nach einem oder mehreren der vorhergehenden Ansprüche, **dadurch gekennzeichnet, dass** an der Ein- und/oder Ausgabeeinrichtung (61), insbesondere einer Ausgabeeinrichtung (61a) einer Recheneinheit (62) wie z.B. einem Personal Computer, eine Abbildung (61c), insbesondere eine Stempelfläche einer Stempelplatte, visualisiert wird und über die Ein- und/oder Ausgabeeinrichtung (61), insbesondere die Eingabeeinrichtung (61b), der Abbildung (61c) mehrere Teilbereiche (66, 67) zugeteilt werden.

21. Verfahren nach Anspruch 20, **dadurch gekennzeichnet, dass** die Zuteilung der Teilbereiche (66, 67) durch Festlegung von mehreren auszubildenden bzw. anzubringenden Gravuranordnungen, beispielsweise Schriftzügen, an der Abbildung (61c) erfolgt und diese Gravuranordnungen folglich bevorzugt an einer Stempelplatte mittels der Materialabtragungseinrichtung (6) gebildet werden.

22. Verfahren nach einem oder mehreren der Ansprüche 19 bis 21, **dadurch gekennzeichnet, dass** entsprechend der Anzahl und Form der Teilbereiche (66, 67) bzw. Gravuranordnungen durch die Steuereinrichtung (9) die Oberflächenteilbereiche (59) bzw. Schneidlinien (53) am Stempelkissen (4) zum Trennen des Stempelkissens (4) in Kissenteile (11) festgelegt werden.

23. Verfahren nach einem oder mehreren der vorhergehenden Ansprüche, **dadurch gekennzeichnet, dass** die Steuer und/oder Regelvorgänge bzw. Berechnungsvorgänge der Steuereinrichtung (9), beispielsweise die Festlegung der Schneidlinien (43), der Oberflächenteilbereiche (59), die Positionierung der Handhabungseinrichtung (7) usw., durch Softwaremittel erfolgen.

24. Verfahren nach einem oder mehreren der vorhergehenden Ansprüche, **dadurch gekennzeichnet, dass** nachdem mittels der Ein- und/oder Ausgabeeinrichtung (61) die Teilbereiche (63, 64) bzw. Gravuranordnungen festgelegt wurden durch die Softwaremittel eine automatische Bereichs- bzw. Schneidlinieneinteilung zur Fertigung der Kissenteile (11) und/oder Stempelplatte erfolgt.

25. Verfahren nach einem oder mehreren der vorhergehenden Ansprüche, **dadurch gekennzeichnet, dass** der Materialabtrag durch die Materialabtragungseinrichtung (6) über Energiestrahlung (34) von einer Strahlenquelle (33), insbesondere eines Laserstrahls (38) einer Laseranordnung (36), erfolgt.

26. Bearbeitungsvorrichtung (1), zumindest umfassend eine Materialabtragungseinrichtung (6) und eine Handhabungseinrichtung (7), wobei zumindest ein Bearbeitungskopf (10) der Materialabtragungseinrichtung (6) über die Handhabungseinrichtung (7) zumindest in einer XY- Ebene verstellbar, insbesondere bewegbar, ist und die Handhabungseinrichtung (7) zur Steuerung und/oder Regelung derselben mit einer Steuereinrichtung (9) verbunden und/oder verbindbar ist, **dadurch gekennzeichnet, dass** die Bearbeitungsvorrichtung (1) eine Tintenspendeeinrichtung (46) zur bedarfsweisen Abgabe von Stempeltinte (47), insbesondere färbenden Fluiden, aufweist.

27. Bearbeitungseinrichtung nach Anspruch 26, **dadurch gekennzeichnet, dass** die Handhabungseinrichtung (7) zur Verstellung von zumindest einer Auslassöffnung (55) der Tintenspendeeinrichtung (46) beispielsweise relativ zu einer Werkstückaufnahme (8) ausgebildet ist.

28. Bearbeitungseinrichtung nach Anspruch 26 oder 27, **dadurch gekennzeichnet, dass** die Tintenspendeeinrichtung (46) zumindest eine Abgabeeinrichtung (48) mit eine oder mehrerer Abgabedüsen (49) für Stempeltinte (47) aufweist.

29. Bearbeitungseinrichtung nach einem oder mehreren der Ansprüche 26 bis 28, **dadurch gekennzeichnet, dass** zur Bildung einer der Handhabungseinrichtung (7) zugeordneten Effektoreinheit (19) zumindest die Abgabeeinrichtung (48) der Tintenspendeeinrichtung (46) und/oder zumindest der Bearbeitungskopf (10) der Materialabtragungseinrichtung (6) dieser zugeordnet sind und vorzugsweise an einer Halterungseinrichtung (32) der Effektoreinheit (19) mit dieser bewegungsgekoppelt angeordnet sind.

30. Bearbeitungseinrichtung nach einem oder mehreren der Ansprüche 26 bis 29, **dadurch gekennzeichnet, dass** die Effektoreinheit (19), insbesondere die Halterungseinrichtung (32), über die Handhabungseinrichtung (7) positionsverstellbar ausgebildet ist.

31. Bearbeitungseinrichtung nach einem oder mehreren der Ansprüche 26 bis 30, **dadurch gekennzeichnet, dass**, die Tintenspendeeinrichtung (46) zumindest eine durch einen Abgabekanal (54) gebildete Auslassöffnung (55) zur Abgabe der Stempeltinte (47) aufweist.

32. Bearbeitungseinrichtung nach Anspruch 31, **dadurch gekennzeichnet, dass** die Auslassöffnung (55) an der Abgabedüse (49) ausgebildet ist und die Auslassöffnung (55) mit zumindest einer Aufnahmekammer für die Stempeltinte, insbesondere einem Tintenbehälter (51), strömungsverbunden ist.

33. Bearbeitungseinrichtung nach einem oder mehreren der Ansprüche 26 bis 32, **dadurch gekennzeichnet, dass** die Tintenspendeeinrichtung (46) mehrere Abgabedüsen (49) mit Auslassöffnungen (55) aufweist.

34. Bearbeitungseinrichtung nach einem oder mehreren der Ansprüche 31 bis 33, **dadurch gekennzeichnet, dass** die ein oder mehreren Auslassöffnungen (55) der Abgabedüsen (49) je mit einem Strömungskanal (52) für Stempeltinte (47) in Flüssigkeitsleitungen (50) strömungsverbunden sind.

35. Bearbeitungseinrichtung nach einem oder mehreren der Ansprüche 26 bis 34, **dadurch gekennzeichnet, dass** der zumindest eine Tintenbehälter (51) vorzugsweise stationär an einer Fertigungsanlage (14) angeordnet ist und dessen Aufnahmekammer für Stempeltinte (47) bevorzugt über zumindest eine Flüssigkeitsleitung (50) mit der oder den Auslassöffnungen (55) strömungsverbunden ist.

36. Bearbeitungseinrichtung nach einem oder mehreren der Ansprüche 26 bis 35, **dadurch gekennzeichnet, dass** die Tintenspendeeinrichtung (46) eine Dosiereinrichtung (67) zur kontrollierbaren Abgabe von Stempeltinte (47) aufweist.

37. Bearbeitungseinrichtung nach Anspruch 36, **dadurch gekennzeichnet, dass** die Dosiereinrichtung (67) als Druckerzeuger (68) gebildet ist, der mit der Tintenzufuhr, insbesondere den Tintenbehältern (51) und/oder den Flüssigkeitsleitungen (50) und/oder dem Abgabekanal (54), zumindest im Bereich der Auslassöffnung (55) wirkungsverbunden ist.

38. Bearbeitungseinrichtung nach einem oder mehreren der Ansprüche 26 bis 37, **dadurch gekennzeichnet, dass** vorzugsweise im Bereich der Auslassöffnung (55) in der Tintenzufuhr, insbesondere der Abgabedüse (49) oder der Flüssigkeitsleitung (50), eine Sperreinrichtung (70), insbesondere ein Rückschlagventil (71), zur flüssigkeitsdichten Versiegelung der Auslassöffnung (55) angeordnet ist.

39. Bearbeitungseinrichtung nach einem oder mehreren der Ansprüche 26 bis 38, **dadurch gekennzeichnet, dass** eine Aufnahmekammer (53) der zumindest einen Abgabedüse (49) mit mehreren Tintenzufuhren, insbesondere Strömungskanälen (52), strömungsverbunden bzw. strömungsverbindbar ist.

40. Bearbeitungseinrichtung nach einem oder mehreren der Ansprüche 26 bis 39, **dadurch gekennzeichnet, dass** die Handhabungseinrichtung (7) zumindest eine Führungsanordnung (26, 28) und zumindest eine Antriebseinrichtung (22, 29) zur Verstellung bzw. Positionierung bevorzugt der Effektoreinheit (19) umfasst.

41. Bearbeitungseinrichtung nach einem oder mehreren der Ansprüche 26 bis 40, **dadurch gekennzeichnet, dass** die Antriebseinrichtung (22, 29) mit der Steuereinrichtung (9) zur Steuerung und/oder Regelung wirkverbunden ist und die Antriebseinrichtung (22, 29) zur bedarfsweisen Verstellung bzw. Bewegung eines Tragarmes (25) und/oder der Halterungseinrichtung (31) der Effektoreinheit (19) mittels der Führungsanordnung (26, 28) ausgebildet ist.

42. Bearbeitungseinrichtung nach einem oder mehreren der Ansprüche 26 bis 41, **dadurch gekennzeichnet, dass** die Steuereinrichtung (9) eine Speichereinrichtung umfasst, in welcher Softwaremittel hinterlegt sind.

43. Bearbeitungseinrichtung nach einem oder mehreren der Ansprüche 26 bis 42, **dadurch gekennzeichnet, dass** die Steuereinrichtung (9) durch eine über eine Schnittstelle mit der Bearbeitungseinrichtung (1), insbesondere der Materialabtragungseinrichtung (6) und/oder der Handhabungseinrichtung (7) und/oder der Tintenzufuhr (46), verbundene Ein- und/oder Ausgabeeinrichtung (61), insbesondere einer Rechnereinheit (62), gebildet ist.

44. Bearbeitungseinrichtung nach einem oder mehreren der Ansprüche 26 bis 43, **dadurch gekennzeichnet, dass** die Materialabtragungseinrichtung (6) durch eine Strahlenquelle (33), insbesondere eine Laseranordnung (36), gebildet ist.

## Claims

1. Method of processing, by machine, composite components (2) comprising at least a support device (3) and a stamp pad (4) by means of a processing device (1), whereby, in order to process the composite component (2), at least one operating head (10) of a material-removing unit (6) and the composite component (2) are moved relative to one another by means of a handling unit (7) controlled and/or regulated by a control unit (9), in particular in an XY plane, and material is removed from the composite component (2) by the material-removing unit (6), **characterised in that** the stamp pad (4) of the composite component (2) which is at least partially joined to the support device (3) is divided into several pad parts (11) spaced at a distance apart from one another by means of a dividing gap (42).

2. Method as claimed in claim 1, **characterised in that** at least one cutting line (43) is defined on the composite component (2) by means of the control unit (9), in particular on a processing surface (39), and the stamp pad (4) is split into the pad parts (11) along the cutting line (43).

3. Method as claimed in claim 1 or 2, **characterised in that** material is continuously removed across a thickness (41) of the stamp pad (4), preferably along the cutting line (43), in order to form the dividing gap (42) and a composite component (2) with non-connected pad parts (11) is thus produced.

4. Method as claimed in one or more of the preceding claims, **characterised in that** once the stamp pad (4) has been cut into several pad parts (11), it is preferably provided with stamping ink (47) or inking fluids by means of an ink dispenser unit (46).

5. Method as claimed in claim 4, **characterised in that** the pad parts (11) are provided with different and/or the same type, in particular differently coloured and/or identically coloured, stamping inks (47) or inking fluids.

6. Method as claimed in one or more of claims 4 or 5, **characterised in that** ink is dispensed by the ink dispenser unit (46) in the form of ink drops (58), which are dripped through one or more outlet orifices (55) in the direction of at least one application point (56) on one of the pad parts (11).

7. Method as claimed in one or more of claims 4 to 6, **characterised in that** several application points (56) of a pad top face (57) of the stamp pad (4) are fixed or pre-set by the control unit (9), in particular in a grid pattern.

8. Method as claimed in one or more of claims 4 to 7, **characterised in that** different types of stamping ink (47) for the different pad parts (11) are dispensed respectively via different outlet orifices (55), each with a flow connection to separate housing chambers in stamping ink containers (51) and/ or different types of stamping inks (47) for the different pad parts (11) are dispensed via a single outlet orifice (55) which can be connected to several different housing chambers in stamping ink containers (51) for different stamping inks (47).

9. Method as claimed in one or more of claims 4 to 8, **characterised in that** several different types, in particular differently coloured, stamping inks (47) are mixed and different types or colours of stamping inks (47), in particular from the palette of the RGB, CMYK colours etc., are created in readiness for application to the pad parts (11) by, for example, an additive process of mixing specifically metered quantities of stamping inks (47).

10. Method as claimed in one or more of claims 4 to 9, **characterised in that** at least the outlet orifice (55), in particular an outlet nozzle, of the ink dispenser unit (46) is positioned on the different application points (56) in order to dispense ink, preferably at grid points.

11. Method as claimed in one or more of claims 4 to 10, **characterised in that** ink is applied in pulses to the application points (56) by means of one or more ink drops (58).

12. Method as claimed in one or more of claims 4 to 11, **characterised in that** the stamping ink (47) is dispensed by a fluid ejection from the at least one outlet orifice (55) by briefly applying an over-pressure, in particular a pressure surge, at least in the region of the outlet orifice (55), preferably in the ink containers (51).

13. Method as claimed in one or more of claims 4 to 12, **characterised in that** the outlet orifice (55) is sealed to prevent unintentional dispensing of ink by means of a shut-off device (70) which can be switched into a position permitting a passage by applying force and which is preferably in the closed position in the normal state, in particular a check valve (71).

14. Method as claimed in one or more of the preceding claims, **characterised in that** at least one effector unit (19), which preferably incorporates at least one dispensing unit (48) of the ink dispenser unit (46) and the operating head (10) of the material-removing device (6), can be displaced and positioned by means of the handling unit (7).

15. Method as claimed in one or more of the preceding claims, **characterised in that** surface part-regions (59) are set and/or can be set by the control unit (9) on the processing surface (39) of the composite component (2), in particular the stamp pad (4), after which the stamp pad (4) is cut, preferably into the individual pad parts (11) on the basis of these surface part-regions (59).

16. Method as claimed in claim 15, **characterised in that** the cutting line (43) between mutually adjacent surface part-regions (59) along which at least the material-removing unit (6) is moved by the handling unit (7) is fixed by means of the control unit (9).

17. Method as claimed in one or more of the preceding claims, **characterised in that** the support device (3) for the stamp pad (4) and the pad parts (11) on a base plate are scored along the cutting line (43) simultaneously with the cutting process of the stamp pad (4) by the material-removing unit (6) and/or is partially severed at retaining projections in the region of the processing surface (39).

18. Method as claimed in one of more of the preceding claims, **characterised in that** the effector unit (19) or individual components of the effector unit (19) are displaced and positioned in an XY plane, in particular in a Cartesian co-ordinate system based on two coordinates, by means of the handling unit (7) controlled by the control unit (9).

19. Method as claimed in one or more of the preceding claims, **characterised in that** the surface part-regions (59) are set from an input and/or output device (61) co-operating with the control unit (9).

20. Method as claimed in one or more of the preceding claims, **characterised in that** a diagram (61c), in particular a stamp surface of a stamp plate, is displayed at the input and/or output device (61), in particular an output unit (61a) of a computer unit (62) such as a personal computer for example, and the diagram (6 1 c) is divided into several part regions (66, 67) via the input and/or output device (61), in particular the input unit (61 b).

21. Method as claimed in claim 20, **characterised in that** the part regions (66, 67) are divided by setting several engraved patterns to be formed and applied to the diagram (6 1 c), for example characters, and these engraved patterns are then formed on a stamp plate preferably by means of the material-removing unit (6).

22. Method as claimed in one or more of claims 19 to 21, **characterised in that** the surface part-regions (59) and cutting lines (53) on the stamp pad (4) for cutting the stamp pad (4) into pad parts (11) are fixed depending on the number and shape of the part regions (66, 67) or engraved patterns by means of the control unit (9).

23. Method as claimed in one or more of the preceding claims, **characterised in that** the control and/or regulating procedures and computing routines of the control unit (9), for example fixing the cutting lines (43), the surface part-regions (59), positioning the handling unit (7) etc., are run by software means.

24. Method as claimed in one or more of the preceding claims, **characterised in that**, once the part regions (63, 64) or engraved patterns have been fixed by means of the input and/or output device (61), the regions or cutting lines are automatically divided by the software means in order to produce the pad parts (11) and/ or stamp plate.

25. Method as claimed in one or more of the preceding claims, **characterised in that** material is removed by the material-removing unit (6) by energy (34) irradiated from a radiation source (33), in particular a laser beam (38) of a laser system (36).

26. Processing device (1), at least incorporating a material-removing unit (6) and a handling unit (7), whereby at least one operating head (10) of the material-removing unit (6) can be adjusted, in particular moved, by means of the handling unit (7) at least in an XY plane, and the handling unit (7) is connected to a control unit (9) in order to control and/or regulate it, **characterised in that** the processing device (1) has an ink dispenser unit (46) for dispensing stamping ink (47) as required, in particular inking fluids.

27. Processing device as claimed in claim 26, **characterised in that** the handling unit (7) is designed to displace at least one outlet orifice (55) of the ink dispenser unit (46) relative to a workpiece holder (8), for example.

28. Processing device as claimed in claim 26 or 27, **characterised in that** the ink dispenser unit (46) has at least one dispensing unit (48) with one or more dispenser nozzles (49) for stamping ink (47).

29. Processing device as claimed in one or more of claims 26 to 28, **characterised in that** in order to set up an effector unit (19) for co-operating with the handling unit (7), at least the dispensing unit (48) of the ink dispenser unit (46) and/or at least the operating head (10) of the material-removing unit (6) co-operates with it and the latter are preferably disposed on a retaining unit (32) of the effector unit (19) and are coupled therewith in displacement.

30. Processing device as claimed in one or more of claims 26 to 29, **characterised in that** the effector unit (19), in particular the retaining unit (32), is designed so that it can be positioned and displaced by means of the handling unit (7).

31. Processing device as claimed in one or more of claims 26 to 30, **characterised in that** the ink dispenser unit (46) has at least one outlet orifice (55) in the form of a discharge passage (54) for dispensing the stamping ink (47).

32. Processing device as claimed in claim 31, **characterised in that** the outlet orifice (55) is disposed on the dispenser nozzle (49) and the outlet orifice (55) has a flow connection to at least one housing chamber for the stamping ink, in particular an ink container (51).

33. Processing device as claimed in one or more of claims 26 to 32, **characterised in that** the ink dispenser unit (46) has several nozzles (49) with outlet orifices (55).

34. Processing device as claimed in one or more of claims 31 to 33, **characterised in that** the one or more outlet orifices (55) of the dispenser nozzles (49) each have a flow connection to a flow passage (52) for stamping ink (47) in fluid lines (50).

35. Processing device as claimed in one or more of claims 26 to 34, **characterised in that** the at least one ink container (51) is preferably disposed in a stationary arrangement on a production system (14) and its housing chamber for stamping ink (47) preferably has a flow connection via at least one fluid line (50) to the outlet orifice or orifices (55).

36. Processing device as claimed in one or more of claims 26 to 35, **characterised in that** the ink dispenser unit (46) has a metering unit (67) to enable controlled dispensing of stamping ink (47).

37. Processing device as claimed in claim 36, **characterised in that** the metering unit (67) is provided in the form of a pressure generator (68), which is actively connected to the ink delivery system, in particular the ink containers (51) and/or the fluid lines (50) and/or the discharge passage (54), at least in the region of the outlet orifice (55).

38. Processing device as claimed in one or more of claims 26 to 37, **characterised in that** a shut-off device (70), in particular a check valve (71), is provided, preferably in the region of the outlet orifice (55) in the ink delivery system, in particular the dispenser nozzle (49) or the fluid line (50), in order to provide a fluid-tight seal of the outlet orifice (55).

39. Processing device as claimed in one or more of claims 26 to 38, **characterised in that** a housing chamber (53) of the at least one dispenser nozzle (49) has a flow connection or can be placed in a flow connection with several ink delivery systems, in particular flow passages (52).

40. Processing device as claimed in one or more of claims 26 to 39, **characterised in that** the handling unit (7) has at least one guide system (26, 28) and at least one drive mechanism (22, 29) for displacing and positioning preferably the effector unit (19).

41. Processing device as claimed in one or more of claims 26 to 40, **characterised in that** the drive mechanism (22, 29) is actively connected to the control unit (9) for control and/or regulation purposes and the drive mechanism (22, 29) is designed for adjusting and moving a support arm (25) and/or the retaining unit (31) of the effector unit (19) as necessary by means of the guide system (26, 28).

42. Processing device as claimed in one or more of claims 26 to 41, **characterised in that** the control unit (9) has a memory unit in which software means are stored.

43. Processing device as claimed in one or more of claims 26 to 42, **characterised in that** the control unit (9) is provided in the form of an input and/or output unit (61), in particular a computer unit (62), connected via an interface to the processing device (1), in particular the material-removing unit (6) and/ or the handling unit (7) and/or the ink delivery system (46).

44. Processing device as claimed in one or more of claims 26 to 43, **characterised in that** the material-removing unit (6) is provided in the form of a radiation source (33), in particular a laser system (36).

## Revendications

1. Procédé d'usinage de pièces composites (2) constituées au moins d'un système de support (3) et d'un coussin encreur (4) au moyen d'un dispositif d'usinage (1), dans lequel, pour usiner la pièce composite (2), au moins une tête d'usinage (10) d'un système d'enlèvement de matière (6) et la pièce composite (2) sont déplacés l'un par rapport à l'autre, en particulier dans un plan XY, par un système de manipulation (7) commandé et/ou réglé par un système de commande (9) et le système d'enlèvement de matière (6) effectue un enlèvement de matière sur la pièce composite (2), **caractérisé en ce que** le système d'enlèvement de matière (6) divise le coussin encreur (4) relié au moins partiellement au système de support (3) de la pièce composite (2) en plusieurs parties de coussin (11) espacées les unes des autres par un joint de séparation (42).

2. Procédé selon la revendication 1, **caractérisé en ce que** le système de commande (9) définit au moins une ligne de coupe (43) sur la pièce composite (2), en particulier sur une surface d'usinage (39), et **en ce que** le coussin encreur (4) est divisé en parties de coussin (11) le long de la ligne de coupe (43).

3. Procédé selon la revendication 1 ou la revendication 2, **caractérisé en ce que** de la matière est enlevée sur une épaisseur (41) du coussin encreur (4), de préférence le long de la ligne de coupe (43), pour former le joint de séparation (42) d'un bout à l'autre et produire ainsi une pièce composite (2) avec des parties de coussin (11) non connectées.

4. Procédé selon l'une ou plusieurs des revendications précédentes, **caractérisé en ce que**, après la division du coussin encreur (4) en plusieurs parties de coussin (11), celles-ci sont munies d'encre pour tampon (47) ou de fluides colorants, de préférence au moyen d'un système de distribution d'encre (46).

5. Procédé selon la revendication 4, **caractérisé en ce que** les parties de coussin (11) sont munies d'encres pour tampon (47) ou de fluides colorants différents et/ou similaires, en particulier de différentes couleurs et/ou de la même couleur.

6. Procédé selon l'une ou plusieurs des revendications 4 ou 5, **caractérisé en ce que** le système de distribution d'encre (46) effectue une distribution d'encre sous la forme de gouttes d'encre (58) qui sont déposées goutte à goutte par le biais d'un ou plusieurs orifices de sortie (55) en direction d'au moins un point de dépôt (56) sur l'une des parties de coussin (11).

7. Procédé selon l'une ou plusieurs des revendications 4 à 6, **caractérisé en ce que** le système de commande (9) définit ou prédétermine plusieurs points de dépôt (56) sur un dessus de coussin (57) du coussin encreur (4), en particulier sous forme de matrice.

8. Procédé selon l'une ou plusieurs des revendications 4 à 7, **caractérisé en ce que** des encres pour tampon (47) de nature diverse pour les différentes parties de coussin (11) sont distribuées chacune par le biais de différents orifices de sortie (55) qui sont chacun en communication fluide avec des chambres réceptacles séparées dans des réservoirs d'encre pour tampon (51) et/ou **en ce que** des encres pour tampon (47) de nature diverse pour les différentes parties de coussin (11) sont distribuées par le biais d'un seul orifice de sortie (55) qui peut être relié à plusieurs chambres réceptacles différentes dans des réservoirs d'encre pour tampon (51) pour des encres pour tampon (47) de nature diverse.

9. Procédé selon l'une ou plusieurs des revendications 4 à 8, **caractérisé en ce que** plusieurs encres pour tampon (47) de nature diverse, en particulier de différentes couleurs, sont mélangées et **en ce que**, par un mélangeage dosable, par exemple additif, des encres pour tampon (47), d'autres types ou teintes d'encres pour tampon (47), en particulier des coloris du nuancier RVB, CMJN, etc., sont produites pour le dépôt sur les parties de coussin (11).

10. Procédé selon l'une ou plusieurs des revendications 4 à 9, **caractérisé en ce que** au moins l'orifice de sortie (55), en particulier une buse de sortie, du système de distribution d'encre (46) est positionné pour distribuer de l'encre sur les différents points de dépôt (56), de préférence sur des points disposés en matrices.

11. Procédé selon l'une ou plusieurs des revendications 4 à 10, **caractérisé en ce qu'**un dépôt d'encre pulsé est effectué avec à chaque fois une ou plusieurs gouttes d'encre (58) sur les points de dépôt (56).

12. Procédé selon l'une ou plusieurs des revendications 4 à 11, **caractérisé en ce qu'**une distribution de l'encre pour tampon (47) est effectuée par une expulsion de liquide à partir dudit au moins un orifice de sortie (55) au moyen d'une surpression de courte durée, en particulier d'un choc de pression, au moins dans la zone de l'orifice de sortie (55), de préférence dans les réservoirs d'encre (51).

13. Procédé selon l'une ou plusieurs des revendications 4 à 12, **caractérisé en ce que**, pour éviter une distribution d'encre imprévue, l'orifice de sortie (55) est obturé au moyen d'un dispositif d'arrêt (70) qui peut être amené en position de passage en appliquant une force et qui en temps normal se trouve de préférence en position de fermeture, en particulier un clapet antiretour (71).

14. Procédé selon l'une ou plusieurs des revendications précédentes, **caractérisé en ce qu'**au moins un module effecteur (19), comprenant de préférence au moins un dispositif distributeur (48) du système de distribution d'encre (46) et la tête d'usinage (10) du système d'enlèvement de matière (6), peut être déplacé ou positionné par le système de manipulation (7).

15. Procédé selon l'une ou plusieurs des revendications précédentes, **caractérisé en ce que** le système de commande (9) détermine ou peut déterminer sur la surface d'usinage (39) de la pièce composite (2), en particulier du coussin encreur (4), des parties de surface (59), suite à quoi le coussin encreur (4) est de préférence divisé en parties de coussin (11) individuelles conformément à ces parties de surface (59).

16. Procédé selon la revendication 15, **caractérisé en ce que** le système de commande (9) définit entre des parties de surface (59) adjacentes la ligne de coupe (43) le long de laquelle au moins le système d'enlèvement de matière (6) est déplacé par le système de manipulation (7).

17. Procédé selon l'une ou plusieurs des revendications précédentes, **caractérisé en ce que** le système de support (3) du coussin encreur (4) et des parties de coussin (11) est rainuré et/ou partiellement sectionné au niveau de saillies de maintien dans la zone de la surface d'usinage (39) sur une plaque de base en même temps que l'opération de division du coussin encreur (4) suivant la ligne de coupe (43) par le système d'enlèvement de matière (6).

18. Procédé selon l'une ou plusieurs des revendications précédentes, **caractérisé en ce que** le système de manipulation (7) contrôlé par le système de commande (9) déplace et positionne le module effecteur (19) ou des composants individuels du module effecteur (19) dans un plan XY, en particulier dans un système de coordonnées cartésiennes constitué de deux coordonnées.

19. Procédé selon l'une ou plusieurs des revendications précédentes, **caractérisé en ce que** la définition des parties de surface (59) se fait au moyen d'un dispositif d'entrée et/ou sortie (61) affecté au système de commande (9).

20. Procédé selon l'une ou plusieurs des revendications précédentes, **caractérisé en ce que**, sur le dispositif d'entrée et/ou sortie (61), en particulier un dispositif de sortie (61a) d'une unité de calcul (62) telle que, par exemple, un ordinateur personnel, une image (61c), en particulier une surface de tampon d'une plaque matrice, est visualisée et **en ce que** plusieurs zones partielles (66, 67) sont allouées à l'image (61c) par le dispositif d'entrée et/ou sortie (61), en particulier le dispositif d'entrée (61c).

21. Procédé selon la revendication 20, **caractérisé en ce que** l'allocation des zones partielles (66, 67) se fait en définissant plusieurs agencements de gravure à former ou à réaliser, par exemple des caractères, sur l'image (61c) et ces agencements de gravure sont ensuite formés de préférence sur une plaque matrice au moyen du système d'enlèvement de matière (6).

22. Procédé selon l'une ou plusieurs des revendications 19 à 21, **caractérisé en ce que** le système de commande (9) définit les parties de surface (59) ou les lignes de coupe (53) sur le coussin encreur (4) en fonction du nombre et de la forme des zones partielles (66, 67) ou des agencements de gravure afin de diviser le coussin encreur (4) en parties de coussin (11).

23. Procédé selon l'une ou plusieurs des revendications précédentes, **caractérisé en ce que** les opérations de commande et/ou de réglage ou les opérations de calcul du système de commande (9), par exemple la définition des lignes de coupe (43), des parties de surface (59), le positionnement du système de manipulation (7), etc., se font par des moyens logiciels.

24. Procédé selon l'une ou plusieurs des revendications précédentes, **caractérisé en ce que**, après que les zones partielles (63, 64) ou les agencements de gravure ont été définis au moyen du dispositif d'entrée et/ou sortie (61), une division automatique par zones ou par lignes de coupe est effectuée par les moyens logiciels afin de fabriquer les parties de coussin (11) et/ou la plaque matrice.

25. Procédé selon l'une ou plusieurs des revendications précédentes, **caractérisé en ce que** l'enlèvement de matière par le système d'enlèvement de matière (6) se fait au moyen d'un rayonnement énergétique (34) émis par une source de rayonnement (33), en particulier au moyen d'un faisceau laser (38) d'un système de laser (36).

26. Dispositif d'usinage (1), comprenant au moins un système d'enlèvement de matière (6) et un système de manipulation (7), dans lequel au moins une tête d'usinage (10) du système d'enlèvement de matière (6) peut être réglée, en particulier déplacée, par le système de manipulation (7) au moins dans un plan XY et le système de manipulation (7) est relié et/ou peut être relié pour la commander et/ou la régler à un système de commande (9), **caractérisé en ce que** le dispositif d'usinage (1) présente un système de distribution d'encre (46) pour distribuer à la demande de l'encre pour tampon (47), en particulier des fluides colorants.

27. Dispositif d'usinage selon la revendication 26, **caractérisé en ce que** le système de manipulation (7) est réalisé pour déplacer au moins un orifice de sortie (55) du système de distribution d'encre (46), par exemple par rapport à une fixation de pièce (8).

28. Dispositif d'usinage selon la revendication 26 ou 27, **caractérisé en ce que** le système de distribution d'encre (46) présente au moins un dispositif distributeur (48) avec une ou plusieurs buses distributrices (49) pour l'encre pour tampon (47).

29. Dispositif d'usinage selon l'une ou plusieurs des revendications 26 à 28, **caractérisé en ce que**, pour former un module effecteur (19) affecté au système de manipulation (7), au moins le dispositif distributeur (48) du système de distribution d'encre (46) et/ou au moins la tête d'usinage (10) du système d'enlèvement de matière (6) lui sont affectés et de préférence disposés sur un dispositif de fixation (32) du module effecteur (19) d'une manière couplée en mouvement à ce dernier.

30. Dispositif d'usinage selon l'une ou plusieurs des revendications 26 à 29, **caractérisé en ce que** le module effecteur (19), en particulier le dispositif de fixation (32), est réalisé de manière à pouvoir être positionné au moyen du système de manipulation (7).

31. Dispositif d'usinage selon l'une ou plusieurs des revendications 26 à 30, **caractérisé en ce que** le système de distribution d'encre (46) présente au moins un orifice de sortie (55) formé par un conduit de distribution (54) pour distribuer l'encre pour tampon (47).

32. Dispositif d'usinage selon la revendication 31, **caractérisé en ce que** l'orifice de sortie (55) est réalisé sur la buse de distribution (49) et **en ce que** l'orifice de sortie (55) est en communication fluide avec au moins une chambre réceptacle pour l'encre pour tampon, en particulier un réservoir d'encre (51).

33. Dispositif d'usinage selon l'une ou plusieurs des revendications 26 à 32, **caractérisé en ce que** le système de distribution d'encre (46) présente plusieurs buses distributrices (49) avec des orifices de sortie (55).

34. Dispositif d'usinage selon l'une ou plusieurs des revendications 31 à 33, **caractérisé en ce que** le ou les orifices de sortie (55) des buses distributrices (49) sont chacun en communication fluide avec un conduit d'écoulement (52) pour l'encre pour tampon (47) dans des lignes de liquide (50).

35. Dispositif d'usinage selon l'une ou plusieurs des revendications 26 à 34, **caractérisé en ce que** le au moins un réservoir d'encre (51) est disposé de préférence fixe sur une installation de fabrication (14) et **en ce que** sa chambre réceptacle pour l'encre pour tampon (47) est en communication fluide, de préférence par le biais d'au moins une ligne de liquide (50), avec le ou les orifices de sortie (55).

36. Dispositif d'usinage selon l'une ou plusieurs des revendications 26 à 35, **caractérisé en ce que** le système de distribution d'encre (46) présente un dispositif doseur (67) pour distribuer de manière contrôlable l'encre pour tampon (47).

37. Dispositif d'usinage selon la revendication 36, **caractérisé en ce que** le dispositif doseur (67) est réalisé sous la forme d'un générateur de pression (68) qui est relié de manière opérationnelle à l'alimentation en encre, en particulier aux réservoirs d'encre (51) et/ou aux lignes de liquide (50) et/ou au conduit de distribution (54), au moins dans la zone de l'orifice de sortie (55).

38. Dispositif d'usinage selon l'une ou plusieurs des revendications 26 à 37, **caractérisé en ce qu'**un dispositif d'arrêt (70), en particulier un clapet antiretour (71), est disposé pour obturer l'orifice de sortie (55) de manière étanche aux liquides, de préférence dans la zone de l'orifice de sortie (55) de l'alimentation en encre, en particulier de la buse de distribution (49) ou de la ligne de liquide (50).

39. Dispositif d'usinage selon l'une ou plusieurs des revendications 26 à 38, **caractérisé en ce qu'**une chambre réceptacle (53) de la au moins une buse de distribution (49) est ou peut être mise en communication fluide avec plusieurs alimentations en encre, en particulier des conduits d'écoulement (52).

40. Dispositif d'usinage selon l'une ou plusieurs des revendications 26 à 39, **caractérisé en ce que** le système de manipulation (7) comprend au moins un agencement de guidage (26, 28) et au moins un dispositif d'entraînement (22, 29) pour déplacer ou positionner de préférence le module effecteur (19).

41. Dispositif d'usinage selon l'une ou plusieurs des revendications 26 à 40, **caractérisé en ce que** le dispositif d'entraînement (22, 29) est relié de manière opérationnelle au système de commande (9) pour la commande et/ou le réglage et **en ce que** le dispositif d'entraînement (22, 29) est réalisé de façon à régler ou déplacer à la demande un bras support (25) et/ou le dispositif de fixation (31) du module effecteur (19) au moyen de l'agencement de guidage (26, 28).

42. Dispositif d'usinage selon l'une ou plusieurs des revendications 26 à 41, **caractérisé en ce que** le système de commande (9) comprend un dispositif de stockage dans lequel des moyens logiciels sont mémorisés.

43. Dispositif d'usinage selon l'une ou plusieurs des revendications 26 à 42, **caractérisé en ce que** le système de commande (9) est formé par un dispositif d'entrée et/ou sortie (61), en particulier une unité de calcul (62), relié par une interface au dispositif d'usinage (1), en particulier au système d'enlèvement de matière (6) et/ou au système de manipulation (7) et/ou à l'alimentation en encre (46).

44. Dispositif d'usinage selon l'une ou plusieurs des revendications 26 à 43, **caractérisé en ce que** le système d'enlèvement de matière (6) est formé par une source de rayonnement (33), en particulier un système de laser (36).
